# EUROPEAN PATENT SPECIFICATION

(11) **EP 4 060 847 B1**
(45) Date of publication and mention of the grant of the patent: **15.04.2026**
(21) Application number: 20886737.4
(22) Date of filing: 18.09.2020
(51) Int. Cl.: H02H 5/12, H02H 1/04, H02H 3/33

(54) **ANTI-ELECTRIC-SHOCK MONITORING AND PROTECTION METHOD AND APPARATUS FOR LOW-VOLTAGE USER END**
VERFAHREN UND VORRICHTUNG ZUR ÜBERWACHUNG UND ZUM SCHUTZ VOR STROMSCHLÄGEN FÜR EIN NIEDERSPANNUNGSBENUTZERENDE
PROCÉDÉ ET APPAREIL DE SURVEILLANCE ET DE PROTECTION CONTRE LES DÉCHARGES ÉLECTRIQUES POUR UNE EXTRÉMITÉ D'UTILISATEUR BASSE TENSION

(30) Priority: 11.11.2019 CN 201911097160
(43) Date of publication of application: 21.09.2022
(73) Proprietor: Xi'an Jiaotong University, Xi'an, Shaanxi 710049 (CN); HUANGBANG CHUANGKE (HUIZHOU) INTELLIGENT TECHNOLOGY CO., LTD., Guangdong 516006 (CN)
(72) Inventor: TANG, Xiaojun, Xi'an, Shaanxi 710049 (CN); LI, Yong, Xi'an, Shaanxi 710049 (CN); SUN, Yezheng, Xi'an, Shaanxi 710049 (CN)
(74) Representative: Moser Götze & Partner Patentanwälte mbB
(86) International application number: PCT/CN2020/116288
(87) International publication number: WO 2021/093457

(56) References cited:
- EP-A1- 2 541 715
- EP-A2- 3 273 559
- WO-A1-2019/117606
- CN-A- 1 610 203
- CN-A- 104 953 537
- CN-A- 110 912 097
- CN-U- 2 070 046
- CN-U- 204 886 120
- US-A1- 2009 316 312
- US-A1- 2015 198 931

## Description

### FIELD OF THE INVENTION

The present invention relates to the fields of safety science, electrical engineering, and instrument science and technology, and in particular, to an anti-electric-shock monitoring and protection method and apparatus for a low-voltage user end.

### BACKGROUND OF THE INVENTION

At present, mains electricity entered into the user is usually three-phase alternating current of 380V, and single-phase alternating current of 220V. For electricity consumption in general places such as families, cultural tourism sites, cultural places, and offices, the single-phase alternating current of 220V is used more often, where one is a live wire, and the other is a ground wire. When a human body touches the ground wire, there is no electric shock feeling; but when the human body touches the live wire, there is a strong electric shock feeling, and even there may be a danger to life. After an insulation layer of the ground wire is damaged, no fire may occur; but after insulation of the live wire has a problem, fire may occur.

To avoid fire caused by insulation of a conventional wire, that is, the live wire, and avoid electric shock that occurs because the human body touches the live wire, for places such as some families and cultural tourism sites, an isolation transformer is added at an incoming line end of the user, so that a user line is electrically isolated from the mains electricity, and lines entering the user are not classified into a ground wire and a fire wire. In this case, two wires in a twisted pair for the user have certain almost equally distributed capacitances to the ground. Moreover, the value of the distributed capacitance depends on the length, the geometric dimension, and the insulation material of the cable. Therefore, the earth is equivalent to a neutral point of the two wires, and effective voltage on each wire is approximately 110V. When a person is in complete contact with the earth, the person is almost an equipotential body with the earth. When the person is not in complete contact with the earth, for example, the person stands with shoes on, the capacitance between the person and the earth is far greater than that between the wire and the earth. In this case, the person and the earth are approximately an equipotential body. When the body of the person touches one of the wires, electricity on a grounding capacitance of the wire may flow through the human body to be connected to the ground, making the person an equipotential body or approximately an equipotential body to the ground. A voltage between the other wire and the ground becomes 220V or approximately 220V. This method can effectively avoid a problem that fire may be caused after insulation of the live wire in the conventional mains electricity has a problem, but still cannot completely eliminate electric shock to the human body. If the wire is short, electric energy stored in a capacitor is very small and capacitive reactance is very large because the distributed capacitance is small. When the person accidentally touches a single wire, the electric energy stored on the capacitor is discharged through the human body, a generated transient current is small, and a steady-state current formed between the wires by the human body is also small. Therefore, in this case, there may not necessarily be an obvious electric shock feeling. However, if the wire is very long, the distributed capacitance may become greater, the electric energy stored in the capacitor may be increased, and the capacitive reactance may be decreased. In this case, the person touches the wire, the transient current passing through the human body when the capacitor discharges may be relatively large, and the steady-state current formed between the wires by the human body may also be increased, and thus there may be an obvious electric shock feeling. If both wires are touched, there may be a danger to life.

EP 3 273 559 A2 discloses an apparatus for preventing electric shock in the event of flooding and a method therefor. To this end, the apparatus for preventing electric shock in the event of flooding may comprise: a transformer for supplying a voltage using a neutral grounding method in a single-phase two-wire low-voltage power distribution system; an earth leakage circuit breaker connected to power output from the transformer, an electric currents measurement unit for measuring the amount of electric currents passing through the earth leakage circuit breaker, a control unit for calculating the contact resistance to be compensated for, using the amount of electric currents from the electric currents measurement unit, and transmitting a control signal corresponding thereto; and a contact resistance compensation unit for compensating for the contact resistance according to the control signal from the control unit.

EP 2 541 715 A1 discloses a DC power supply insulation fault detection circuit including a plurality of circuit breaking elements located at a positive terminal and a negative terminal of each circuit in a power supply system, at least one leakage current detector located in the circuit, and at least one positive voltage transient compensator and at least one negative voltage transient compensator respectively bridging the positive terminal and negative terminal of the power supply system. The positive and negative voltage transient compensators respectively include a charge/discharge circuit to allow an energy storage circuit to be charged. When grounding insulation deterioration takes place at the positive or negative terminal of the leakage current detector, a leakage current loop is formed so that energy storage elements discharge and the leakage current detector detects current variations on the positive and negative terminals, and issue an alarm signal or control cutoff of the circuit breaking elements.

WO 2019/117606 A1 discloses a device and a method for diagnosing shorting occurring in a positive electrode contactor of a battery pack. A device for diagnosing a positive electrode contactor of a battery pack according to the present invention comprises: a positive electrode contactor on a charge/discharge path connected to a positive electrode terminal; and a negative electrode contactor on a charge/discharge path connected to a negative electrode.

US 2009/316312 A1 discloses an Earth Leakage Circuit Breaker (ELCB) used as an electric switch for an electrical circuit which employs a double breakage method of determining whether leakage occurs based on total leakage voltage of a total leakage current detected by a zero-phase current transformer and automatically cutting off the supply of power from a power supply, and determining whether leakage occurs based on the net leakage voltage of a net leakage current synchronously detected by a synchronous detector 90 and automatically cutting off the supply of power from the power supply, so that there are advantages in that the rate of incidence of malfunction of the ELCB is reduced and the leakage breaking function of the ELCB is effectively improved, thereby considerably improving safety.

### SUMMARY OF THE INVENTION

An objective of the present invention is to resolve electric shock accidents existing in the prior art, and provide an anti-electric-shock monitoring and protection method and apparatus for a low-voltage user end used in places such as families, cultural tourism sites, and offices. When a human body accidentally touches an electrical circuit, an electric shock wire is quickly determined and distributed capacitance is discharged, to protect life safety of people.

To achieve the foregoing objective, the present invention is implemented by using the following technical solutions.

In accordance with the present invention, the appended independent claim 1 defines an anti-electric-shock monitoring and protection apparatus for a low-voltage user end, including an isolation transformer, two voltage sensors, one or more current sensors, a conditioning circuit, a microprocessor, two electronic switches, and a circuit breaker; wherein
the two voltage sensors are respectively a first voltage sensor and a second voltage sensor, and the two electronic switches respectively are an electronic switch S₁ and an electronic switch S₂;
the isolation transformer and the circuit breaker are sequentially connected between the mains electricity and a user side, one end of the first voltage sensor is connected to a wire A, one end of the second voltage sensor is connected to a wire B, and other ends of the two voltage sensors are both connected to the ground; one end of the electronic switch S₁ is connected to the wire A, the other end is connected in series to a resistor R₁ and is connected to the ground, and both ends of the electronic switch S₁ and the resistor R₁ are connected in parallel with a capacitors C₁; one end of the electronic switch S₂ is connected to the wire B, and the other end is connected in series to a resistor R₂ and is connected to the ground, and both ends of the electronic switch S₂ and the resistor R₂ are connected in parallel with a capacitors C₂; and capacitance values satisfy that C₁≈C₂, and are smaller than a grounding capacitance C₀ of a user-side wire;
the current sensor includes a magnetic ring coil and a current limiting resistor, and is configured to measure a value and a direction of a shock current, a magnetic ring is sleeved on an outer side of the two wires, a coil is wound on the magnetic ring, and the current limiting resistor is connected to an output end of the coil, to provide a measurable output voltage;
output ends of the two voltage sensors, the two electronic switches, and the current sensor are all connected to an input end of the conditioning circuit, the input end of the conditioning circuit is connected to an input end of the microprocessor, and an output end of the microprocessor is respectively connected to control ends of the two electronic switches; and
during operation, the isolation transformer is configured to isolate the mains electricity from the user side; when a single-wire electric shock occurs to a human body at user-side, the conditioning circuit can perform conditioning on signals respectively from the voltage sensor and the current sensor; an electric shock wire is distinguished by detecting voltages to ground and shock currents of two power supply wires; the microprocessor outputs a control signal to control the electronic switches connected in parallel at two ends of a grounding capacitance of a corresponding line to be closed; the electronic switch between the wire to which an electric shock occurs and the ground is closed when an electric shock occurs to the human body but no personal injury is caused, so that the voltage to ground of the wire is rapidly reduced to close to 0, thereby protecting personal safety; and when a double-wire electric shock occurs to the human body, to protect the personal safety, the two electronic switches are closed, and thus a short circuit between the wires is resulted in and the circuit breaker automatically trips.

Further improvement of the present invention is:
The isolation transformer can achieve electrical isolation; an input end is of mains electricity of 220V; and secondary output of the input end is an isolated voltage of 220V, to serve as a power supply at the user side.

The two voltage sensors have a same structure and are configured to measure polarity and voltage values of the voltages to ground of the two wires; the resistance of the sensor is not less than 220 kiloohms; and phase lag at 50 Hz power frequency is less than 10°.

The microprocessor receives detected signals of the current sensor and the voltage sensor, to determine which wire has an electric shock, thereby integrating output voltages of the current sensor, and controlling on or off of the electronic switch; and to ensure that the microprocessor can send an instruction in a timely manner when the human body gets an electric shock to control an action of the electronic switch. The program execution cycle of the microprocessor is less than 1 ms, which meets requirements on response time of a detection apparatus and matches with a speed of a signal acquisition element.

When the microprocessor sends a corresponding control signal, the corresponding electronic switch is closed. The electronic switch meets requirements that a leakage current is less than 1 microampere and response time is less than 0.1 millisecond, wherein a withstanding voltage of the electronic switch is greater than 220V. A solid-state relay or a field effect transistor is used; a resistance value R of the resistor connected in series to the electronic switch is between 250 ohms and 20 kiloohms; a withstanding power within 1 second is greater than 220 V²/R; precision is determined by a measurement accuracy level, and is not less than 0.01%; and the resistors are all low-temperature drift resistors, and temperature drift is less than 1 ppm/°C.

A setting value of a shock current for the electronic switch of the apparatus to take a protection action is less than 5 mA, or a value that can be set by a user; and action time is less than 10 milliseconds.

One or more current sensors can be mounted according to actual conditions, and limit of detection of the current sensor is less than 1 mA. If N current sensors are mounted, and N>=2, a line from a user side of the isolation transformer to a farthest end of the user side is sequentially and equally divided into N+1 sections in total, that is, first, second, ..., and (N+1)^{th} sections. A current sensor is mounted at each demarcation point on the line, wherein a current transformer mounted between the first section and the second section is a first current transformer, a current transformer mounted between the second section and a third section is a second current transformer, ..., and an N^{th} current sensor is mounted between an N^{th} section and the (N+1)^{th} section. If only one current transformer can be mounted, the current transformer is mounted at an intermediate point, and the line from the user side of the isolation transformer to the farthest end of the user side is sequentially equally divided into two sections, that is, a first section and a second section. If the entire user-side line cannot be modified except the user entrance end, the current transformer is mounted between the capacitors C₁ and C₂ that are connected in parallel and the user-side line, wherein capacitance values of the connected capacitors satisfy C₁≈ C₂≈ C₀.

In accordance with the present invention, the appended independent claim 8 defines an anti-electric-shock monitoring and protection method for a low-voltage user end, wherein the method is based on the foregoing anti-electric-shock monitoring and protection apparatus for a low-voltage user end; if there are N current sensors, the user-side line is divided into N+1 sections; it is set that a result measured by the first voltage sensor is V₁, a result measured by the second voltage sensor is V₂, a current detected by the first current sensor is I₁, a current detected by the second current sensor is I₂, ..., and a current detected by the N^{th} current sensor is I_{N}; a direction in which a current flows from a secondary side of the isolation transformer to a user side is set as a positive direction, and otherwise, a current direction is a negative direction; and when an electric shock occurs, actions are taken as follows:
(1) when no electric shock occurs, an average output voltage of the current sensors is 0, the two power supply wires have equal voltages to ground and are opposite in polarity, and the two electronic switches take no actions;
(2) when it is detected that V₁ is positive and V₂ is negative, if I₁=I₂=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is positive and V₂ is negative, if Iₕ₋₁ is positive, Iₕ is 0, and a value of V₁ decreases and a value of V₂ increases, it is indicated that a single-wire electric shock occurs on the wire A in an h^{th} section of the line, the microprocessor sends an instruction, and the electronic switch S₁ is turned on, wherein 2<=h<=N; when it is detected that V₁ is positive and V₂ is negative, if I_{N-1}>0, I_{N} is 0, and a value of V₁ decreases and a value of V₂ increases, it is indicated that a single-wire electric shock occurs on the wire A in the (N+1)^{th} section of the line, the microprocessor sends an instruction, and the electronic switch S₁ is turned on; when it is detected that V₁ is positive and V₂ is negative, if I₁=I₂=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is positive and V₂ is negative, if Iₕ₋₁<0, Iₕ=0, and a value of V₁ increases and a value of V₂ decreases, it is indicated that a single-wire electric shock occurs on the wire B in an h^{th} section of the line, the microprocessor sends an instruction, and the electronic switch S₂ is turned on; when it is detected that V₁ is positive and V₂ is negative, if I_{N-1}<0, I_{N}<0, and a value of V₁ increases and a value of V₂ decreases, it is indicated that a single-wire electric shock occurs on the wire B in the (N+1)^{th} section of the line, the microprocessor sends an instruction, and the electronic switch S₂ is turned on; when it is detected that V₁ is negative and V₂ is positive, if I₁=I₂=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is negative and V₂ is positive, if Iₕ₋₁<0, Iₕ=0, and a value of V₁ decreases and a value of V₂ increases, it is indicated that a single-wire electric shock occurs on the wire A in an h^{th} section of the line, the microprocessor sends an instruction, and the electronic switch S₁ is turned on; and when it is detected that V₁ is negative and V₂ is positive, if I_{N-1}<0, I_{N}<0, and a value of V₁ decreases and a value of V₂ increases, it is indicated that a single-wire electric shock occurs on the wire A in the (N+1)^{th} section of the line, the microprocessor sends an instruction, and the electronic switch S₁ is turned on;
   when it is detected that V₁ is negative and V₂ is positive, if I₁=I₂=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is negative and V₂ is positive, if Iₕ₋₁<0, Iₕ=0, and a value of V₁ decreases and a value of V₂ increases, it is indicated that a single-wire electric shock occurs on the wire B in an h^{th} section of the line, the microprocessor sends an instruction, and the electronic switch S₂ is turned on; and when it is detected that V₁ is negative and V₂ is positive, if I_{N-1}<0, I_{N}<0, and a value of V₁ decreases and a value of V₂ increases, it is indicated that a single-wire electric shock occurs on the wire B in the (N+1)^{th} section of the line, the microprocessor sends an instruction, and the electronic switch S₂ is turned on;
(3) when it is detected that polarity of V₁ and V₂ is the same as that in the manner (2) but a change trend is opposite to that in the manner (2), and a current change trend is also opposite to that in the manner (2), it is indicated that the human body is getting rid of the single-wire electric shock, and therefore the corresponding electronic switch is disconnected; and
(4) when a same current sensor detects two shock current pulse signals within a short time of 0.05-1 second, and a value of a second current is significantly larger than that of a first detected shock current, it is determined that a double-wire electric shock occurs at this time; both electronic switches are closed to generate a short-circuit current; the circuit breaker is disconnected to protect personal safety; and power supply can be restored merely by manually closing a switch after it is confirmed by personnel that no one gets an electric shock.

An anti-electric-shock monitoring and protection method for a low-voltage user end, wherein the method is based on the foregoing anti-electric-shock monitoring and protection apparatus for a low-voltage user end; if there is only one current sensor, the user-side line is divided into two sections; it is set that a result measured by the first voltage sensor is V₁, a result measured by the second voltage sensor is V₂, and a current detected by the current sensor is I₁; and when an electric shock occurs, actions are taken as follows:
(1) when no electric shock occurs, an average output voltage of the current sensors is 0, the two power supply wires have equal voltages to ground and are opposite in polarity, and the two electronic switches take no actions;
(2) when it is detected that V₁ is positive and V₂ is negative, if I₁=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is positive and V₂ is negative, if I₁=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is positive and V₂ is negative, if I₁<0, and a value of V₁ increases and a value of V₂ decreases, it is indicated that a single-wire electric shock occurs on the wire B in the second section of the line, the microprocessor sends an instruction, and the electronic switch S₂ is turned on; and when it is detected that V₁ is positive and V₂ is negative, if I₁>0, and a value of V₁ decreases and a value of V₂ increases, it is indicated that a single-wire electric shock occurs on the wire A in the second section of the line, the microprocessor sends an instruction, and the electronic switch S₁ is turned on;
   when it is detected that V₁ is negative and V₂ is positive, if I₁=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is negative and V₂ is positive, if I₁ is positive, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is negative and V₂ is positive, if I₁<0, and a value of V₂ increases and a value of V₁ decreases, it is indicated that a single-wire electric shock occurs on the wire A in the second section of the line, the microprocessor sends an instruction, and the electronic switch S₁ is turned on; and when it is detected that V₁ is negative and V₂ is positive, if I₁>0, and a value of V₁ increases and a value of V₂ decreases, it is indicated that a single-wire electric shock occurs on the wire B in the second section of the line, the microprocessor sends an instruction, and the electronic switch S₂ is turned on; and
(3) when it is detected that polarity of V₁ and V₂ is the same as that in the manner (2) but a change trend is opposite to that in the manner (2), and a change trend of I₁ is also opposite to that in the manner (2), it is indicated that the human body is getting rid of the single-wire electric shock, and therefore the corresponding electronic switch is disconnected; and
(4) when a same current sensor detects two shock current pulse signals within a short time of 0.05-1 second, and a value of a second current is significantly larger than that of a first detected shock current, it is determined that a double-wire electric shock occurs at this time; both electronic switches are closed to generate a short-circuit current; the circuit breaker is disconnected to protect personal safety; and power supply can be restored merely by manually closing a switch after it is confirmed by personnel that no one gets an electric shock.

An anti-electric-shock monitoring and protection method for a low-voltage user end, wherein the method is based on the foregoing anti-electric-shock monitoring and protection apparatus for a low-voltage user end; if there is only one current sensor, the current sensor is connected between the capacitors C₁ and C₂ and the user-side wire; it is set that a result measured by the first voltage sensor is V₁, a result measured by the second voltage sensor is V₂, and a current detected by the current sensor is I₁; a direction in which a current flows from a secondary side of the isolation transformer to the user side is set as a positive direction, and otherwise, a current direction is a negative direction; and when an electric shock occurs, actions are taken as follows:
(1) when no electric shock occurs, an average output voltage of the current sensors is 0, the two power supply wires have equal voltages to ground and are opposite in polarity, and the two electronic switches take no actions;
(2) when it is detected that V₁ is positive and V₂ is negative, if I₁=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is positive and V₂ is negative, if I₁=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is positive and V₂ is negative, if I₁<0, and a value of V₁ increases and a value of V₂ decreases, it is indicated that a single-wire electric shock occurs on the wire B in the second section of the line, the microprocessor sends an instruction, and the electronic switch S₂ is turned on; and when it is detected that V₁ is positive and V₂ is negative, if I₁>0, and a value of V₁ decreases and a value of V₂ increases, it is indicated that a single-wire electric shock occurs on the wire A in the second section of the line, the microprocessor sends an instruction, and the electronic switch S₁ is turned on;
   when it is detected that V₁ is negative and V₂ is positive, if I₁=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is negative and V₂ is positive, if I₁ is positive, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is negative and V₂ is positive, if I₁<0, and a value of V₂ increases and a value of V₁ decreases, it is indicated that a single-wire electric shock occurs on the wire A in the second section of the line, the microprocessor sends an instruction, and the electronic switch S₁ is turned on; and when it is detected that V₁ is negative and V₂ is positive, if I₁>0, and a value of V₁ increases and a value of V₂ decreases, it is indicated that a single-wire electric shock occurs on the wire B in the second section of the line, the microprocessor sends an instruction, and the electronic switch S₂ is turned on; and
(3) when it is detected that polarity of V₁ and V₂ is the same as that in the manner (2) but a change trend is opposite to that in the manner (2), and a change trend of I₁ is also opposite to that in the manner (2), it is indicated that the human body is getting rid of the single-wire electric shock, and therefore the corresponding electronic switch is disconnected; and
(4) when a same current sensor detects two shock current pulse signals within a short time of 0.05-1 second, and a value of a second current is significantly larger than that of a first detected shock current, it is determined that a double-wire electric shock occurs at this time; both electronic switches are closed to generate a short-circuit current; the circuit breaker is disconnected to protect personal safety; and power supply can be restored merely by manually closing a switch after it is confirmed by personnel that no one gets an electric shock.

Compared with the prior art, the present invention has the following beneficial effects.

According to the anti-electric-shock monitoring and protection method and apparatus for a low-voltage user end provided in the present invention, a power supply line that passes through the isolation transformer can be monitored and the human body can be protected in an event of electric shock, to eliminate an electric shock feeling. The voltages to ground and the shock currents of the two power supply wires are detected by the voltage sensor and the current sensor, to locate a position at which the electric shock occurs. A wire constituting an electric shock loop is identified, and a type of the electric shock is determined, to control the electronic switch to act in a timely manner, so that the wire to which the electric shock occurs is shorted to the ground, thereby eliminating the electric shock feeling of the human body. When an electric shock occurs on one wire, only the electric shock wire needs to be shorted; and when electric shocks occur on two wires, the two wires are shorted at the same time. Therefore, the present invention not only achieves single-wire electric shock protection, but also resolves threat of a double-wire electric shock. An action time of an entire electric shock protection apparatus for the human body is less than 10ms, so that threat of an electric shock is resolved before the human body gets an electric shock but no injury is caused to the human body, to eliminate the electric shock feeling, thereby protecting personal safety. In addition, compared with other electric shock protection apparatuses, according to the present invention, when there is a single-wire electric shock, there is no need to cut off the power source, and the power can continue to be supplied while the safety of the human body is protected, thereby ensuring continuity of power supply.

### BRIEF DESCRIPTION OF THE DRAWINGS

FIG. 1 is a diagram of voltages to ground of two wires in a normal situation;
FIG. 2 is a diagram of voltages to ground of two wires when a human body gets an electric shock on a wire B;
FIG. 3 is a schematic diagram of a mounting mode and a structure of an anti-electric-shock monitoring and protection apparatus for a low-voltage user end according to the present invention;
FIG. 4 is a schematic structural diagram of a voltage sensor; and
FIG. 5 is a circuit diagram of a solid-state relay controlled by a single-chip microcomputer.

### DETAILED DESCRIPTION OF THE EMBODIMENTS

To make a person skilled in the art better understand the technical solutions of the present invention, the technical solutions in the embodiments of the present invention are clearly and completely described below with reference to the accompanying drawings in the embodiments of the present invention. Obviously, the described embodiments are merely some embodiments of the present invention and are not all embodiments, and are not intended to limit the scope disclosed in the present invention. In addition, in the following description, descriptions for well-known structures and technologies are omitted to avoid unnecessarily obscuring the concepts disclosed in the present invention. According to the embodiments in the present invention, all other embodiments derived by one of ordinary skills in the art without an effective effort should belong to the protection scope of the present invention.

Various schematic structural diagrams according to the embodiments disclosed in the present invention are shown in the accompanying drawings. The drawings are not drawn according to a proportion. For clarity, some details are exaggerated and some details may be omitted. The shapes, relative sizes, and positional relationships of various regions and layers shown in the figures are only exemplary, and may vary in practice due to manufacturing tolerance or technical limitations. Moreover, a person skilled in the art can additionally design regions/layers with different shapes, sizes, and relative positions according to actual requirements.

It should be noted that terms "first", "second", and the like in the specification, claims, and accompanying drawings of the present invention are intended to distinguish between similar objects, but are not necessarily intended to describe a particular sequence or a sequential order. It should be understood that data used in this way can be converted in suitable cases, so that the embodiments of the present invention that are described herein can be implemented in a sequence other than the sequences shown in the figures or described herein. In addition, the terms "including", "comprising", and any variants thereof are intended to cover a non-exclusive inclusion. For example, a process, a method, a system, a product, or a device that includes a series of steps or units is not limited to listed steps or units, but may further include a step or unit that is not clearly listed, or another inherent step or unit of the process, the method, the product, or the device.

The present invention is further described in detail below with reference to the accompanying drawings.

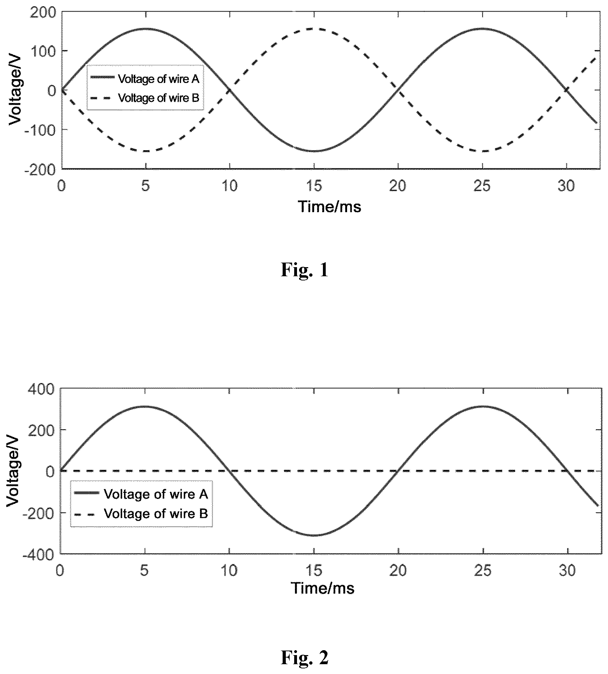

To prevent a human body from great danger due to an accidental electric shock, the alternating current of 220V is usually transmitted to places such as families, cultural places, and offices after passing through an isolation transformer. Generally, voltages to ground of two power supply wires are equal and are opposite in direction, as shown in FIG. 1. When human body touches one of the wires, electricity on a grounding capacitance of the wire may flow through the human body to be connected to the ground, making the person an equipotential body to the ground. A voltage between the other wire and the ground becomes 220V. The voltage value is as shown in FIG. 2. When the person accidentally touches a single wire, if the wire is relatively short, due to small, distributed capacitance and a small current that flows through the human body, there may not necessarily be an obvious electric shock feeling when the current flows through the human body. However, if the wire is very long, the distributed capacitance may become greater. When the person touches the wire, the current flowing through the human body while the capacitor discharges may be relatively great, and there may be an obvious electric shock feeling. If both wires are touched, there may be a danger to life. Therefore, when the human body gets an electric shock, the electric shock wire and the type of the electric shock need to be quickly distinguished, so that the protection apparatus acts quickly to protect safety of the human body.

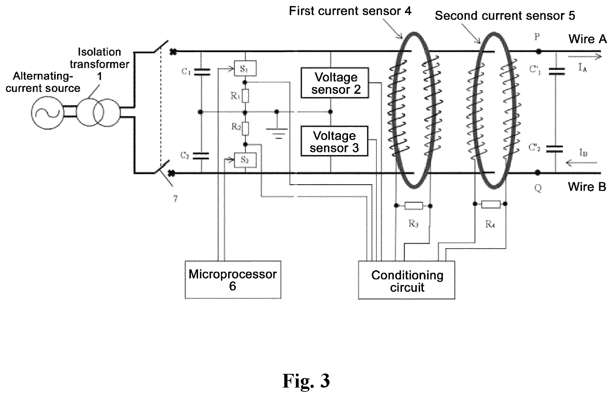

On the basis of isolation, the present invention provides an anti-electric-shock monitoring and protection apparatus for a low-voltage user end. A schematic structural diagram and a mounting mode in a power supply line of the anti-electric-shock monitoring and protection apparatus for a low-voltage user end are as shown in FIG. 3. The anti-electric-shock monitoring and protection apparatus for a low-voltage user end includes an isolation transformer, two voltage sensors, one or more current sensors, a conditioning circuit, a microprocessor, two electronic switches, and a circuit breaker. When a single-wire electric shock occurs to a human body, the position of the electric shock is located and the electric shock wire is distinguished by detecting voltages to ground and shock currents of two power supply wires. The microprocessor outputs a control signal to control the electronic switches connected in parallel at two ends of a grounding capacitance of a corresponding line to be closed, so that the capacitor may be discharged when an electric shock occurs to the human body, but no personal injury is caused, thereby protect personal safety. When a double-wire electric shock occurs to the human body, to protect the personal safety, the two electronic switches are closed, and thus a short circuit between the wires is produced and the circuit breaker automatically trips, thereby protecting the system.

As shown in FIG. 3, the magnetic ring coil is sleeved on an outer side of a twisted-pair cable and is mounted to be close to an entrance, and is configured to detect whether the human body is in contact with an electrical wire and to measure the value and the direction of the shock current. When the human body is not in contact with the electrical wire, a combined current flowing through the magnetic ring coil is zero, and no inducting voltage may be induced on the coil. When the human body touches the wire, the grounding capacitance of the corresponding wire may be discharged to generate a current, and a combined current in the magnetic ring coil is no longer zero. An alternating current generates an alternating magnetic field, so as to induce an inducting current on the coil. If the magnetic ring is mounted to be close to the user entrance and the power supply line is long, C'₁>>C₁ and C'₂>>C₂. If an electric shock occurs to the human body at a point P on a wire A and a voltage of the wire A is positive, a current sensed by the magnetic ring flows to the right, or otherwise the current flows to the left. If an electric shock occurs to the human body at a point Q on a wire B and a voltage of the wire B is negative, a current sensed by the magnetic ring flows to the left, or otherwise the current flows to the right. Polarity and magnitude of the voltage to ground of the wire may be sensed by using the current sensor. Because the output voltage on the magnetic ring coil is a differential value of the current, when the human body just gets an electric shock, the output voltage of the magnetic ring coil is relatively large.

When a double-wire electric shock occurs, the human body may not touch the two wires at the same time, but there is a very short time difference. Within this time difference, the magnetic ring coil may detect two current pulse signals.

It may be learned from the foregoing description that, which wire has an electric shock and a type of the electric shock may be determined by the flow direction and the value of a sensed current and voltage polarity of the wire.

The foregoing two detection signals are transmitted to the microprocessor for processing after signal conditioning. Since output of the magnetic ring coil is a differential value of the shock current, the microprocessor needs to perform digital integration on the signal, to achieve phase compensation. For a single-phase electric shock, after the electric shock wire is determined, the microprocessor outputs a control signal to control the electronic switch of the grounding capacitance of the electric shock wire to be closed, so as to discharge the grounding capacitance connected in parallel at two ends of the electronic switch when an electric shock occurs to the human body but no personal injury is caused, thereby protecting personal safety. In this case, the voltage value of a resistor connected in series to the electronic switch is measured and is transmitted to the microprocessor via the conditioning circuit. When change trends of the measured voltage value and the current value are opposite to those in a case of an electric shock, it is considered that the human body has get rid of the electric shock, and the microprocessor sends an instruction again to control the electronic switch that is previously closed and is connected to the ground to be disconnected again. If the human body touches two wires, according to the foregoing detection signal, it is determined that the human body touches the two wires at the same time, and the microprocessor may send a control signal to control electronic switches S₁ and S₂ to be closed, thereby protecting personal safety. It should be noted that, because the electronic switches S₁ and S₂ are closed, the two wires are approximately to be shorted, that is, a short circuit occurs between the wires, and the circuit breaker may automatically trip to protect the system.

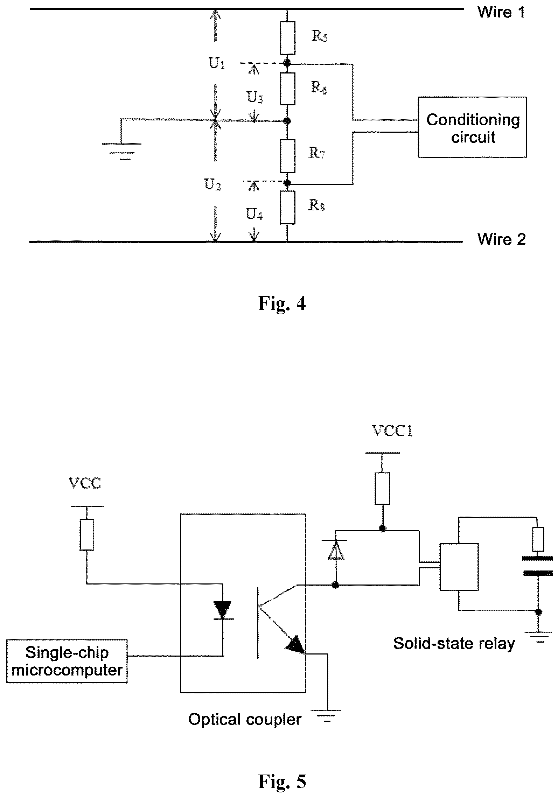

The two voltage sensors have a same structure, and respectively measure polarity to ground of the two power supply wires. The two voltage sensors can withstand at least a voltage of 220V for a long time, can withstand a special short-time overvoltage such as lightning surge, and have safety margins for electrical isolation. If the detected wire is connected to the ground a resistance of the sensor is not less than 220 kΩ, and phase lag at 50-Hz power frequency is less than 10°. As shown in FIG. 4, each voltage sensor uses a voltage-dividing resistor circuit consisting of two resistors that are connected in series. The resistance value of the voltage sensor is determined based on the level of a to-be-detected voltage and the load current of a to-be-detected power supply line, and the secondary voltage thereof needs to be maintained at about 1-4V. The entire branch with voltage-dividing resistors connected in series can directly withstand at least a voltage of 220V, can withstand a special short-time overvoltage such as lightning surge, and has safety margins for electrical isolation.

To ensure that when the human body gets an electric shock, the microprocessor sends an instruction in a timely manner to control the action of the electronic switch. The microprocessor is required to have a certain processing and response speed, which meets requirements on response time of a detection apparatus and matches with a speed of a signal acquisition element. The microprocessor may be a single-chip microcomputer, a DSP, or the like. Preferably, a single-chip microcomputer is selected to serve as the microprocessor. Single-chip microcomputer programs are all modularized. Because the single-chip microcomputer program has a lot of functions, the interface is relatively simple and the working speed is also fast, being sufficient to meet requirements on computing.

The required electronic switch needs to meet requirements that a leakage current is less than 1 microampere and response time is less than 0.1 millisecond, wherein the withstanding voltage of the electronic switch needs to be greater than 220V. The electronic switch may be a relay or a field effect transistor. Preferably, a solid-state relay is selected to serve as the electronic switch. The solid-state relay has high reliability, high sensitivity, small control power, and good electromagnetic compatibility; and the switching speed thereof may be as fast as several microseconds. The solid-state relay is a four-terminal active device, wherein two terminals are input control ends, and the other two terminals are output controlled ends. The solid-state relay has a function of amplifying and driving, and has an isolation function. As shown in a circuit diagram of a solid-state relay controlled by a single-chip microcomputer in FIG. 5, the control signal of the single-chip microcomputer is transmitted to the input control end of the solid-state relay through a photoelectric coupler, so that an output end of the solid-state relay is closed to discharge the capacitor. Regarding the resistor connected in series to the electronic switch, precision of the resistance value thereof is determined based on a level of measurement accuracy, and needs to be not less than 0.01%. The resistor is a low-temperature drift resistor, and temperature drift is required to be less than 1 ppm/°C.

### Embodiment:

An implementation process is briefly described in this embodiment with reference to the curves of voltages to ground of two wires in a normal situation in FIG. 1, the curves of voltages to ground of two wires when a human body gets an electric shock on a wire B in FIG. 2, the schematic diagram of a mounting mode and a structure of an anti-electric-shock monitoring and protection apparatus for a low-voltage user end in FIG. 3, and the schematic structural diagram of a voltage sensor in FIG. 4.

According to an anti-electric-shock monitoring and protection method for a low-voltage user end provided in the present invention, it is set that a setting value for the anti-electric-shock monitoring and protection apparatus for a low-voltage user end to act is 5 mA. When no electric shock occurs, an average output voltage of the current sensors is 0, the two power supply wires have equal voltages to ground and are opposite in polarity, and the electronic switch takes no actions. When a single-wire electric shock occurs between human body and the wire A in a second section of a line, the two voltage sensors detect that V₁ is positive and V₂ is negative, I₁ is positive, I₂ is 0, and a value of V₁ decreases and a value of V₂ increases, it is indicated that a single-wire electric shock occurs on the wire A in the second section of the line, and the microprocessor sends an instruction, and the electronic switch S₁ is turned on. When it is detected that V₁ is positive and V₂ is negative, if a value of V₂ decreases, a value of V₁ increases, and a value of I₁ starts to decrease, it is indicated that the human body is getting rid of the single-wire electric shock, and therefore the corresponding electronic switch is disconnected.

When a double-wire electric shock accidentally occurs to the human body, two shock current pulse signals are detected within a short time (0.05-1 second), and the value of a second current is significantly larger than that of a first detected shock current, it is determined that a double-wire electric shock occurs at this time. Both relays are closed, to generate a short-circuit current. A circuit breaker 7 is disconnected to protect personal safety. Power supply is restored by manually closing a switch after it is confirmed by people that no one gets an electric shock.

Obviously, the anti-electric-shock monitoring and protection apparatus for a low-voltage user end provided in the present invention is described in the foregoing embodiment. The position of the electric shock is located and an electric shock line is distinguished by processing detection signals output from the magnetic ring coil and a voltage dividing resistor. The microprocessor outputs a corresponding control signal, so that the electronic switch acts in a timely manner to discharge the corresponding grounding capacitance, thereby effectively protecting the personal safety. The electric shock protection apparatus can not only achieve single-wire electric shock protection, but also may resolve threat of a double-wire electric shock. In addition, compared with other electric shock protection apparatuses, regarding the anti-electric-shock monitoring and protection apparatus for a low-voltage user end in the present invention, when there is a single-wire electric shock, there is no need to cut off a power source, and power can continue to be supplied while the safety of the human body is protected, thereby ensuring continuity of power supply.

The foregoing content is merely to illustrate the technical idea of the present invention, and the protection scope of the present invention cannot be limited thereto. Any modification made based on the technical solutions according to the technical idea provided in the present invention shall fall within the protection scope of the claims of the present invention.

## Claims

1. An anti-electric-shock monitoring and protection apparatus for a low-voltage user end, comprising an isolation transformer (1), two voltage sensors, one or more current sensors, a conditioning circuit, a microprocessor (6), two electronic switches, and a circuit breaker (7),
wherein the two voltage sensors are respectively a first voltage sensor (2) and a second voltage sensor (3), and the two electronic switches respectively are an electronic switch S₁ and an electronic switch S₂;
wherein the isolation transformer (1) and the circuit breaker (7) are sequentially connected via wires A and B between the mains electricity and a user side, one end of the first voltage sensor (2) is connected to a wire A, one end of the second voltage sensor (3) is connected to a wire B, and other ends of the two voltage sensors are both connected to the ground; one end of the electronic switch S₁ is connected to the wire A, the other end is connected in series to a resistor R₁ and is connected to the ground, and both ends of the electronic switch S₁ and the resistor R₁ are connected in parallel with a capacitor C₁; one end of the electronic switch S₂ is connected to the wire B, and the other end is connected in series to a resistor R₂ and is connected to the ground, and both ends of the electronic switch S₂ and the resistor R₂ are connected in parallel with a capacitor C₂; and capacitance values satisfy C₁≈C₂, and are smaller than a grounding capacitance C₀ of wire A or wire B;
wherein the current sensor comprises a magnetic ring coil and a current limiting resistor, and is configured to measure a value and a direction of a shock current, a magnetic ring is sleeved on an outer side of the two wires, a coil is wound on the magnetic ring, and the current limiting resistor is connected in parallel to an output end of the coil, to provide a measurable output voltage;
wherein output ends of the two voltage sensors, the two electronic switches, and the current sensor are all connected to an input end of the conditioning circuit, the output end of the conditioning circuit is connected to an input end of the microprocessor (6), and an output end of the microprocessor (6) is respectively connected to control ends of the two electronic switches; and
the apparatus being adapted to execute the following functions during operation, the isolation transformer (1) is configured to isolate the mains electricity from the user side; when a single-wire electric shock occurs to a human body at user-side, the conditioning circuit is able to perform conditioning on signals respectively from the voltage sensor and the current sensor; an electric shock wire is distinguished by detecting voltages to ground and shock currents of two power supply wires; the microprocessor (6) outputs a control signal to control the electronic switches connected in parallel at two ends of a grounding capacitance of a corresponding line to be closed; the electronic switch between the wire to which an electric shock occurs and the ground is closed when an electric shock occurs to the human body but no personal injury is caused, so that the voltage to ground of the wire is rapidly reduced to close to 0, thereby protecting personal safety; and when a double-wire electric shock occurs to the human body, the two electronic switches are closed, and a short circuit between the wires is resulted in and the circuit breaker (7) automatically trips to protect the personal safety.

2. The anti-electric-shock monitoring and protection apparatus for a low-voltage user end according to claim 1, wherein the isolation transformer (1) is adapted to achieve electrical isolation; an input end is of mains electricity of 220V; and secondary output of the input end is an isolated voltage of 220V, to serve as a power supply at the user side.

3. The anti-electric-shock monitoring and protection apparatus for a low-voltage user end according to claim 1, wherein the two voltage sensors have a same structure, and are configured to measure polarity and voltage values of the voltages to ground of the two wires; a resistance of the sensor is not less than 220 kiloohms; and phase lag at 50-Hz power frequency is less than 10°.

4. The anti-electric-shock monitoring and protection apparatus for a low-voltage user end according to claim 1, wherein the microprocessor (6) is adapted to receive detection signals of the current sensor and the voltage sensor, to determine which wire has an electric shock, thereby integrating output voltages of the current sensor, and controlling on or off of the electronic switch; and to ensure that the microprocessor (6) is adapted to send an instruction in a timely manner when the human body gets an electric shock to control an action of the electronic switch, a program execution cycle of the microprocessor (6) is less than 1 ms, which meets requirements on response time of a detection apparatus and matches with a speed of a signal acquisition element.

5. The anti-electric-shock monitoring and protection apparatus for a low-voltage user end according to claim 1, wherein when the microprocessor (6) is adapted to send a corresponding control signal, the corresponding electronic switch is closed; the electronic switch meets requirements that a leakage current is less than 1 microampere and response time is less than 0.1 millisecond, wherein a withstanding voltage of the electronic switch is greater than 220V; a solid-state relay or a field effect transistor is used; a resistance value R of the resistor connected in series to the electronic switch is between 250 ohms and 20 kiloohms; a withstanding power within 1 second is greater than 220 V²/R; precision is determined by a measurement accuracy level, and is not less than 0.01%; and the resistors are all low-temperature drift resistors, and temperature drift is less than 1 ppm/°C.

6. The anti-electric-shock monitoring and protection apparatus for a low-voltage user end according to claim 1, wherein the apparatus is adapted to set a value of a shock current for the electronic switch of the apparatus to take a protection action is less than 5 mA, or a value set by a user; and action time is less than 10 milliseconds.

7. The anti-electric-shock monitoring and protection apparatus for a low-voltage user end according to claim 1, wherein one or more current sensors are mounted according to actual conditions, and limit of detection of the current sensor is less than 1 mA; if N current sensors are mounted, and N>=2, a line from a user side of the isolation transformer (1) to a farthest end of the user side is sequentially and equally divided into N+1 sections in total, that is, first, second, ..., and (N+1)^{th} sections; a current sensor is mounted at each demarcation point on the line, wherein a current sensor mounted between the first section and the second section is a first current sensor (4), a current sensor mounted between the second section and a third section is a second current sensor (5), ..., and an N^{th} current sensor is mounted between an N^{th} section and the (N+1)^{th} section; if only one current sensor is mounted, the current sensor is mounted at an intermediate point, and the line from the user side of the isolation transformer (1) to the farthest end of the user side is sequentially and equally divided into two sections, that is, first and second sections; and if an entire user-side line cannot be modified except the user entrance end, the current sensor is mounted between the capacitors C₁ and C₂ that are connected in parallel and the user-side line, wherein capacitance values of the connected capacitors satisfy C₁≈ C₂≈ C₀.

8. An anti-electric-shock monitoring and protection method for a low-voltage user end, wherein the method is based on the anti-electric-shock monitoring and protection apparatus for a low-voltage user end according to claim 7; if there are N current sensors, the user-side line is divided into N+1 sections; it is set that a result measured by the first voltage sensor (2) is V₁, a result measured by the second voltage sensor (3) is V₂, a current detected by the first current sensor (4) is I₁, a current detected by the second current sensor (5) is I₂, ..., and a current detected by the N^{th} current sensor is I_{N}; a direction in which a current flows from a secondary side of the isolation transformer to a user side is set as a positive direction, and otherwise, a current direction is a negative direction; and when an electric shock occurs, actions are taken as follows:
(1) when no electric shock occurs, an average output voltage of the current sensors is 0, the two power supply wires have equal voltages to ground and are opposite in polarity, and the two electronic switches take no actions;
(2) when it is detected that V₁ is positive and V₂ is negative, if I₁=I₂=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is positive and V₂ is negative, if Iₕ₋₁ is positive, Iₕ is 0, and a value of V₁ decreases and a value of V₂ increases, it is indicated that a single-wire electric shock occurs on the wire A in an h^{th} section of the line, the microprocessor sends an instruction, and the electronic switch S₁ is turned on, wherein 2<=h<=N; when it is detected that V₁ is positive and V₂ is negative, if I_{N-1}>0, I_{N} is > 0, and a value of V₁ decreases and a value of V₂ increases, it is indicated that a single-wire electric shock occurs on the wire A in the (N+1)^{th} section of the line, the microprocessor sends an instruction, and the electronic switch S₁ is turned on; when it is detected that V₁ is positive and V₂ is negative, if I₁=I₂=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is positive and V₂ is negative, if Iₕ₋₁<0, Iₕ=0, and a value of V₁ increases and a value of V₂ decreases, it is indicated that a single-wire electric shock occurs on the wire B in an h^{th} section of the line, the microprocessor sends an instruction, and the electronic switch S₂ is turned on; when it is detected that V₁ is positive and V₂ is negative, if I_{N-1}<0, I_{N}<0, and a value of V₁ increases and a value of V₂ decreases, it is indicated that a single-wire electric shock occurs on the wire B in the (N+1)^{th} section of the line, the microprocessor sends an instruction, and the electronic switch S₂ is turned on; when it is detected that V₁ is negative and V₂ is positive, if I₁=I₂=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is negative and V₂ is positive, if Iₕ₋₁<0, Iₕ=0, and a value of V₁ decreases and a value of V₂ increases, it is indicated that a single-wire electric shock occurs on the wire A in an h^{th} section of the line, the microprocessor sends an instruction, and the electronic switch S₁ is turned on; and when it is detected that V₁ is negative and V₂ is positive, if I_{N-1}<0, I_{N}<0, and a value of V₁ decreases and a value of V₂ increases, it is indicated that a single-wire electric shock occurs on the wire A in the (N+1)^{th} section of the line, the microprocessor sends an instruction, and the electronic switch S₁ is turned on;
when it is detected that V₁ is negative and V₂ is positive, if I₁=I₂=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is negative and V₂ is positive, if Iₕ₋₁<0, Iₕ=0, and a value of V₁ decreases and a value of V₂ increases, it is indicated that a single-wire electric shock occurs on the wire B in an h^{th} section of the line, the microprocessor sends an instruction, and the electronic switch S₂ is turned on; and when it is detected that V₁ is negative and V₂ is positive, if I_{N-1}<0, I_{N}<0, and a value of V₁ decreases and a value of V₂ increases, it is indicated that a single-wire electric shock occurs on the wire B in the (N+1)^{th} section of the line, the microprocessor sends an instruction, and the electronic switch S₂ is turned on;
(3) when it is detected that polarity of V1 and V2 is the same as that in the manner (2) but a change trend is opposite to that in the manner (2), and a current change trend is also opposite to that in the manner (2), it is indicated that the human body is getting rid of the single-wire electric shock, and therefore the corresponding electronic switch is disconnected; and
(4) when a same current sensor detects two shock current pulse signals within a short time of 0.05-1 second, and a value of a second current is significantly larger than that of a first detected shock current, it is determined that a double-wire electric shock occurs at this time; both electronic switches are closed to generate a short-circuit current; the circuit breaker is disconnected to protect personal safety; and power supply can be restored by manually closing a switch after it is confirmed by personnel that no one gets an electric shock.

9. An anti-electric-shock monitoring and protection method for a low-voltage user end, wherein the method is based on the anti-electric-shock monitoring and protection apparatus for a low-voltage user end according to claim 8; wherein there is only one current sensor and N=1, the user-side line is divided into two sections; it is set that a result measured by the first voltage sensor (2) is V₁, a result measured by the second voltage sensor (3) is V₂, and a current detected by the current sensor (4) is I₁; and when an electric shock occurs, actions are taken as follows:
(1) when no electric shock occurs, an output voltage of the current sensors is 0, the two power supply wires have equal voltages to ground and are opposite in polarity, and the two electronic switches take no actions;
(2) when it is detected that V₁ is positive and V₂ is negative, if Iₕ=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is positive and V₂ is negative, if I₁=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is positive and V₂ is negative, if I₁<0, and a value of V₁ increases and a value of V₂ decreases, it is indicated that a single-wire electric shock occurs on the wire B in the second section of the line, the microprocessor sends an instruction, and the electronic switch S₂ is turned on; and when it is detected that V₁ is positive and V₂ is negative, if I₁>0, and a value of V₁ decreases and a value of V₂ increases, it is indicated that a single-wire electric shock occurs on the wire A in the second section of the line, the microprocessor sends an instruction, and the electronic switch S₁ is turned on;
when it is detected that V₁ is negative and V₂ is positive, if I₁=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is negative and V₂ is positive, if I₁=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is negative and V₂ is positive, if I₁<0, and a value of V₂ increases and a value of V₁ decreases, it is indicated that a single-wire electric shock occurs on the wire A in the second section of the line, the microprocessor sends an instruction, and the electronic switch S₁ is turned on; and when it is detected that V₁ is negative and V₂ is positive, if I₁>0, and a value of V₁ increases and a value of V₂ decreases, it is indicated that a single-wire electric shock occurs on the wire B in the second section of the line, the microprocessor sends an instruction, and the electronic switch S₂ is turned on; and
(3) when it is detected that polarity of V1 and V2 is the same as that in the manner (2) but a change trend is opposite to that in the manner (2), and a change trend of I₁ is also opposite to that in the manner (2), it is indicated that the human body is getting rid of the single-wire electric shock, and therefore the corresponding electronic switch is disconnected; and
(4) when a same current sensor detects two shock current pulse signals within a short time of 0.05-1 second, and a value of a second current is significantly larger than that of a first detected shock current, it is determined that a double-wire electric shock occurs at this time; both electronic switches are closed to generate a short-circuit current; the circuit breaker is disconnected to protect personal safety; and power supply can be restored by manually closing a switch after it is confirmed by personnel that no one gets an electric shock.

10. An anti-electric-shock monitoring and protection method for a low-voltage user end, wherein the method is based on the anti-electric-shock monitoring and protection apparatus for a low-voltage user end according to claim 8; wherein there is only one current sensor and N=1, the current sensor is connected between the capacitors C₁ and C₂ and the user-side wire; it is set that a result measured by the first voltage sensor (2) is V₁, a result measured by the second voltage sensor (3) is V₂, and a current detected by the current sensor (4) is I₁; a direction in which a current flows from a secondary side of the isolation transformer to the user side is set as a positive direction, and otherwise, a current direction is a negative direction; and when an electric shock occurs, actions are taken as follows:
(1) when no electric shock occurs, an average output voltage of the current sensors is 0, the two power supply wires have equal voltages to ground and are opposite in polarity, and the two electronic switches take no actions;
(2) when it is detected that V₁ is positive and V₂ is negative, if Iₕ=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is positive and V₂ is negative, if I₁=0, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is positive and V₂ is negative, if I₁<0, and a value of V₁ increases and a value of V₂ decreases, it is indicated that a single-wire electric shock occurs on the wire B in the second section of the line, the microprocessor sends an instruction, and the electronic switch S₂ is turned on; and when it is detected that V₁ is positive and V₂ is negative, if I₁>0, and a value of V₁ decreases and a value of V₂ increases, it is indicated that a single-wire electric shock occurs on the wire A in the second section of the line, the microprocessor sends an instruction, and the electronic switch S₁ is turned on;
when it is detected that V₁ is negative and V₂ is positive, if I₁=0, and a value of V₁ decreases and a value of V₂ increases, it is indicated that a single-wire electric shock occurs on the wire A in the first section of the line, the microprocessor sends an instruction, and the electronic switch S₁ is turned on; when it is detected that V₁ is negative and V₂ is positive, if I₁ is positive, and a value of V₁ increases and a value of V₂ decreases, it is indicated that a single-wire electric shock occurs on the wire B in the first section of the line, the microprocessor sends an instruction, and the electronic switch S₂ is turned on; when it is detected that V₁ is negative and V₂ is positive, if I₁<0, and a value of V₂ increases and a value of V₁ decreases, it is indicated that a single-wire electric shock occurs on the wire A in the second section of the line, the microprocessor sends an instruction, and the electronic switch S₁ is turned on; and when it is detected that V₁ is negative and V₂ is positive, if I₁>0, and a value of V₁ increases and a value of V₂ decreases, it is indicated that a single-wire electric shock occurs on the wire B in the second section of the line, the microprocessor sends an instruction, and the electronic switch S₂ is turned on; and
(3) when it is detected that polarity of V1 and V2 is the same as that in the manner (2) but a change trend is opposite to that in the manner (2), and a change trend of I₁ is also opposite to that in the manner (2), it is indicated that the human body is getting rid of the single-wire electric shock, and therefore the corresponding electronic switch is disconnected; and
(4) when a same current sensor detects two shock current pulse signals within a short time of 0.05-1 second, and a value of a second current is significantly larger than that of a first detected shock current, it is determined that a double-wire electric shock occurs at this time; both electronic switches are closed, to generate a short-circuit current; the circuit breaker is disconnected to protect personal safety; and power supply can be restored by manually closing a switch after it is confirmed by personnel that no one gets an electric shock.

## Patentansprüche

1. Vorrichtung zur Überwachung und zum Schutz vor Stromschlag für ein Niederspannungs-Endgerät, umfassend einen Trenntransformator (1), zwei Spannungssensoren, einen oder mehrere Stromsensoren, eine Aufbereitungsschaltung, einen Mikroprozessor (6), zwei elektronische Schalter und einen Leistungsschalter (7), wobei die zwei Spannungssensoren jeweils ein erster Spannungssensor (2) und ein zweiter Spannungssensor (3) sind und die zwei elektronischen Schalter jeweils ein elektronischer Schalter S₁ und ein elektronischer Schalter S₂ sind;
wobei der Trenntransformator (1) und der Leistungsschalter (7) über Leitungen A und B zwischen der Netzstromversorgung und einer Benutzerseite nacheinander verbunden sind, ein Ende des ersten Spannungssensors (2) mit einer Leitung A verbunden ist, ein Ende des zweiten Spannungssensors (3) mit einer Leitung B verbunden ist und die anderen Enden der beiden Spannungssensoren jeweils mit der Erde verbunden sind; ein Ende des elektronischen Schalters S₁ mit der Leitung A verbunden ist, das andere Ende in Reihe mit einem Widerstand R₁ verbunden ist und mit der Erde verbunden ist, und beide Enden des elektronischen Schalters S₁ und des Widerstands R₁ parallel zu einem Kondensator C₁ verbunden sind; ein Ende des elektronischen Schalters S₂ mit der Leitung B verbunden ist, und das andere Ende in Reihe mit einem Widerstand R₂ verbunden ist und mit der Erde verbunden ist, und beide Enden des elektronischen Schalters S₂ und des Widerstands R₂ parallel zu einem Kondensator C₂ verbunden sind; und die Kapazitätswerte erfüllen C₁≈C₂ und sind kleiner als eine Erdungskapazität C₀ der Leitung A oder der Leitung B;
wobei der Stromsensor eine Magnetring-Spule und einen Strombegrenzungswiderstand umfasst und dazu konfiguriert ist, einen Wert und eine Richtung eines Stromschlagstroms zu messen, ein Magnetring über der Außenseite der zwei Leitungen gestülpt ist, eine Spule auf den Magnetring gewickelt ist und der Strombegrenzungswiderstand parallel zu einem Ausgangsende der Spule verbunden ist, um eine messbare Ausgangsspannung bereitzustellen;
wobei Ausgangsenden der zwei Spannungssensoren, der zwei elektronischen Schalter und des Stromsensors alle mit einem Eingangsende der Aufbereitungsschaltung verbunden sind, das Ausgangsende der Aufbereitungsschaltung mit einem Eingangsende des Mikroprozessors (6) verbunden ist und ein Ausgangsende des Mikroprozessors (6) jeweils mit Steuereingängen der zwei elektronischen Schalter verbunden ist; und
wobei die Vorrichtung dazu eingerichtet ist, während des Betriebs die folgenden Funktionen auszuführen: der Trenntransformator (1) ist dazu konfiguriert, die Netzstromversorgung von der Benutzerseite zu isolieren; wenn an der Benutzerseite ein Einleiter-Stromschlag am menschlichen Körper auftritt, ist die Aufbereitungsschaltung in der Lage, eine Aufbereitung der Signale jeweils vom Spannungssensor und vom Stromsensor durchzuführen; eine Stromschlag-Leitung wird durch Erfassung der Erdspannungen und der Stromschlagströme der zwei Versorgungsleitungen unterschieden; der Mikroprozessor (6) gibt ein Steuersignal aus, um die an beiden Enden einer Erdungskapazität der entsprechenden Leitung parallel verbundenen elektronischen Schalter zu schließen; der elektronische Schalter zwischen der Leitung, an der der Stromschlag auftritt, und der Erde wird geschlossen, wenn ein Stromschlag am menschlichen Körper auftritt, jedoch keine Personenschädigung verursacht wird, sodass die Erdspannung der Leitung schnell auf nahezu 0 reduziert wird und dadurch die Personensicherheit geschützt wird; und wenn ein Zweileiter-Stromschlag am menschlichen Körper auftritt, werden die zwei elektronischen Schalter geschlossen, wodurch ein Kurzschluss zwischen den Leitungen entsteht und der Leistungsschalter (7) automatisch auslöst, um die Personensicherheit zu schützen.

2. Vorrichtung zur Überwachung und zum Schutz vor Stromschlag für ein Niederspannungs-Endgerät nach Anspruch 1, wobei der Trenntransformator (1) dazu eingerichtet ist, eine elektrische Isolation zu erreichen; ein Eingangsende der Netzstromversorgung von 220 V ist; und der Sekundärausgang des Eingangsendes eine isolierte Spannung von 220 V ist, die als Stromversorgung an der Benutzerseite dient.

3. Vorrichtung zur Überwachung und zum Schutz vor Stromschlag für ein Niederspannungs-Endgerät nach Anspruch 1, wobei die zwei Spannungssensoren die gleiche Struktur aufweisen und dazu konfiguriert sind, die Polarität und die Spannungswerte der Erdspannungen der zwei Leitungen zu messen; ein Widerstand des Sensors beträgt nicht weniger als 220 Kiloohm; und die Phasenverzögerung bei einer Netzfrequenz von 50 Hz beträgt weniger als 10°.

4. Vorrichtung zur Überwachung und zum Schutz vor Stromschlag für ein Niederspannungs-Endgerät nach Anspruch 1, wobei der Mikroprozessor (6) dazu eingerichtet ist, Erfassungssignale des Stromsensors und des Spannungssensors zu empfangen, um festzustellen, an welcher Leitung ein Stromschlag auftritt, dadurch die Ausgangsspannungen des Stromsensors zu integrieren und das Ein- oder Ausschalten des elektronischen Schalters zu steuern; und um sicherzustellen, dass der Mikroprozessor (6) dazu eingerichtet ist, bei einem Stromschlag am menschlichen Körper rechtzeitig eine Anweisung zur Steuerung einer Aktion des elektronischen Schalters zu senden, beträgt ein Programmausführungszyklus des Mikroprozessors (6) weniger als 1 ms, was die Anforderungen an die Reaktionszeit einer Erkennungsvorrichtung erfüllt und zur Geschwindigkeit eines Signalerfassungselements passt.

5. Vorrichtung zur Überwachung und zum Schutz vor Stromschlag für ein Niederspannungs-Endgerät nach Anspruch 1, wobei der entsprechende elektronische Schalter geschlossen wird, wenn der Mikroprozessor (6) dazu eingerichtet ist, um ein entsprechendes Steuersignal zu senden; der elektronische Schalter erfüllt die Anforderungen, dass ein Leckstrom weniger als 1 Mikroampere beträgt und die Ansprechzeit weniger als 0,1 Millisekunden ist, wobei eine Spannungsfestigkeit des elektronischen Schalters größer als 220 V ist; es wird ein Festkörperrelais oder ein Feldeffekttransistor verwendet; ein Widerstandswert R des in Reihe mit dem elektronischen Schalter verbundenen Widerstands liegt zwischen 250 Ohm und 20 Kiloohm; eine innerhalb von 1 Sekunde standzuhaltende Leistung ist größer als 220 V²/R; die Genauigkeit wird durch eine Messgenauigkeitsklasse bestimmt und beträgt nicht weniger als 0,01 %; und die Widerstände sind allesamt Widerstände mit geringer Temperaturdrift, wobei die Temperaturdrift weniger als 1 ppm/°C beträgt.

6. Vorrichtung zur Überwachung und zum Schutz vor Stromschlag für ein Niederspannungs-Endgerät nach Anspruch 1, wobei die Vorrichtung dazu eingerichtet ist, einen Wert eines Stromschlagstroms festzulegen, bei dem der elektronische Schalter der Vorrichtung eine Schutzmaßnahme ausführt, der kleiner als 5 mA oder ein vom Benutzer festgelegter Wert ist; und die Ansprechzeit weniger als 10 Millisekunden beträgt.

7. Vorrichtung zur Überwachung und zum Schutz vor Stromschlag für ein Niederspannungs-Endgerät nach Anspruch 1, wobei ein oder mehrere Stromsensoren entsprechend den tatsächlichen Bedingungen montiert sind und die Nachweisgrenze des Stromsensors weniger als 1 mA beträgt; wenn N Stromsensoren montiert sind und N >= 2, wird eine Leitung von der Benutzerseite des Trenntransformators (1) bis zum am weitesten entfernten Ende der Benutzerseite insgesamt nacheinander und gleichmäßig in N+1 Abschnitte unterteilt, nämlich in einen ersten, zweiten, ... und (N+1)-ten Abschnitt; an jedem Abgrenzungspunkt der Leitung ist ein Stromsensor montiert, wobei ein zwischen dem ersten Abschnitt und dem zweiten Abschnitt montierter Stromsensor ein erster Stromsensor (4) ist, ein zwischen dem zweiten Abschnitt und dem dritten Abschnitt montierter Stromsensor ein zweiter Stromsensor (5) ist, ... und ein N-ter Stromsensor zwischen dem N-ten Abschnitt und dem (N+1)-ten Abschnitt montiert ist; wenn nur ein Stromsensor montiert ist, wird der Stromsensor an einem Zwischenpunkt montiert, und die Leitung von der Benutzerseite des Trenntransformators (1) bis zum am weitesten entfernten Ende der Benutzerseite wird nacheinander und gleichmäßig in zwei Abschnitte unterteilt, nämlich einen ersten und einen zweiten Abschnitt; und wenn eine gesamte Benutzerseitenleitung mit Ausnahme des Benutzereingangs nicht verändert werden kann, wird der Stromsensor zwischen den parallel verbundenen Kondensatoren C₁ und C₂ und der Benutzerseitenleitung montiert, wobei die Kapazitätswerte der verbundenen Kondensatoren C₁ ≈ C₂ ≈ C₀ erfüllen.

8. Verfahren zur Überwachung und zum Schutz vor Stromschlag für ein Niederspannungs-Endgerät, wobei das Verfahren auf der Vorrichtung zur Überwachung und zum Schutz vor Stromschlag für ein Niederspannungs-Endgerät nach Anspruch 7 basiert; wenn N Stromsensoren vorhanden sind, wird die Benutzerseitenleitung in N+1 Abschnitte unterteilt; es wird festgelegt, dass ein vom ersten Spannungssensor (2) gemessener Wert V₁ ist, ein vom zweiten Spannungssensor (3) gemessener Wert V₂ ist, ein vom ersten Stromsensor (4) erfasster Strom I₁ ist, ein vom zweiten Stromsensor (5) erfasster Strom I₂ ist, ... und ein vom N-ten Stromsensor erfasster Strom I_{N} ist; eine Richtung, in der ein Strom von der Sekundärseite des Trenntransformators zur Benutzerseite fließt, wird als positive Richtung festgelegt, andernfalls ist die Stromrichtung negativ; und wenn ein Stromschlag auftritt, werden die folgenden Maßnahmen ergriffen:
(1) wenn kein Stromschlag auftritt, beträgt eine mittlere Ausgangsspannung der Stromsensoren 0, die zwei Versorgungsleitungen weisen gleiche Erdspannungen mit entgegengesetzter Polarität auf, und die zwei elektronischen Schalter führen keine Aktionen aus;
(2) wenn festgestellt wird, dass V₁ positiv und V₂ negativ ist, wenn I₁ = I₂ = 0 und der Wert von V₁ abnimmt und der Wert von V₂ zunimmt, wird angezeigt, dass in dem ersten Abschnitt der Leitung ein Einleiter-Stromschlag an der Leitung A auftritt, der Mikroprozessor sendet eine Anweisung und der elektronische Schalter S₁ wird eingeschaltet; wenn festgestellt wird, dass V₁ positiv und V₂ negativ ist, wenn Iₕ₋₁ positiv ist, Iₕ = 0 ist und der Wert von V₁ abnimmt und der Wert von V₂ zunimmt, wird angezeigt, dass in einem h-ten Abschnitt der Leitung ein Einleiter-Stromschlag an der Leitung A auftritt, der Mikroprozessor sendet eine Anweisung und der elektronische Schalter S₁ wird eingeschaltet, wobei 2 <= h <= N gilt; wenn festgestellt wird, dass V₁ positiv und V₂ negativ ist, wenn I_{N-1} > 0 ist, I_{N} > 0 ist und der Wert von V₁ abnimmt und der Wert von V₂ zunimmt, wird angezeigt, dass in dem (N+1)-ten Abschnitt der Leitung ein Einleiter-Stromschlag an der Leitung A auftritt, der Mikroprozessor sendet eine Anweisung und der elektronische Schalter S₁ wird eingeschaltet; wenn festgestellt wird, dass V₁ positiv und V₂ negativ ist, wenn I₁ = I₂ = 0 ist und der Wert von V₁ zunimmt und der Wert von V₂ abnimmt, wird angezeigt, dass in dem ersten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ positiv und V₂ negativ ist, wenn Iₕ₋₁ < 0 ist, Iₕ = 0 ist und der Wert von V₁ zunimmt und der Wert von V₂ abnimmt, wird angezeigt, dass in einem h-ten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ positiv und V₂ negativ ist, wenn I_{N-1} < 0 ist, I_{N} < 0 ist und der Wert von V₁ zunimmt und der Wert von V₂ abnimmt, wird angezeigt, dass in dem (N+1)-ten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ negativ und V₂ positiv ist, wenn I₁ = I₂ = 0 ist und der Wert von V₁ abnimmt und der Wert von V₂ zunimmt, wird angezeigt, dass in dem ersten Abschnitt der Leitung ein Einleiter-Stromschlag an der Leitung A auftritt, der Mikroprozessor sendet eine Anweisung und der elektronische Schalter S₁ wird eingeschaltet; wenn festgestellt wird, dass V₁ negativ und V₂ positiv ist, wenn Iₕ₋₁ < 0 ist, Iₕ = 0 ist und der Wert von V₁ abnimmt und der Wert von V₂ zunimmt, wird angezeigt, dass in einem h-ten Abschnitt der Leitung ein Einleiter-Stromschlag an der Leitung A auftritt, der Mikroprozessor sendet eine Anweisung und der elektronische Schalter S₁ wird eingeschaltet; und wenn festgestellt wird, dass V₁ negativ und V₂ positiv ist, wenn I_{N-1} < 0 ist, I_{N} < 0 ist und der Wert von V₁ abnimmt und der Wert von V₂ zunimmt, wird angezeigt, dass in dem (N+1)-ten Abschnitt der Leitung ein Einleiter-Stromschlag an der Leitung A auftritt, der Mikroprozessor sendet eine Anweisung und der elektronische Schalter S₁ wird eingeschaltet;
wenn festgestellt wird, dass V₁ negativ und V₂ positiv ist, wenn I₁ = I₂ = 0 ist und der Wert von V₁ zunimmt und der Wert von V₂ abnimmt, wird angezeigt, dass in dem ersten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ negativ und V₂ positiv ist, wenn Iₕ₋₁ < 0 ist, Iₕ = 0 ist und der Wert von V₁ abnimmt und der Wert von V₂ zunimmt, wird angezeigt, dass in einem h-ten Abschnitt der Leitung ein Einleiter-Stromschlag an der Leitung B auftritt, der Mikroprozessor sendet eine Anweisung und der elektronische Schalter S₂ wird eingeschaltet; und wenn festgestellt wird, dass V₁ negativ und V₂ positiv ist, wenn I_{N-1} < 0 ist, I_{N} < 0 ist und der Wert von V₁ abnimmt und der Wert von V₂ zunimmt, wird angezeigt, dass in dem (N+1)-ten Abschnitt der Leitung ein Einleiter-Stromschlag an der Leitung B auftritt, der Mikroprozessor sendet eine Anweisung und der elektronische Schalter S₂ wird eingeschaltet;
(3) wenn festgestellt wird, dass die Polarität von V₁ und V₂ derjenigen in der Ausführungsweise (2) entspricht, jedoch der Änderungsverlauf demjenigen in der Ausführungsweise (2) entgegengesetzt ist und der Stromänderungsverlauf ebenfalls demjenigen in der Ausführungsweise (2) entgegengesetzt ist, wird angezeigt, dass sich der menschliche Körper vom Einleiter-Stromschlag löst, und folglich wird der entsprechende elektronische Schalter abgeschaltet; und
(4) wenn derselbe Stromsensor innerhalb einer kurzen Zeit von 0,05-1 Sekunde zwei Stromschlagimpulssignale erfasst und der Wert des zweiten Stroms deutlich größer ist als der des zuerst erfassten Stromschlagstroms, wird zu diesem Zeitpunkt festgestellt, dass ein Zweileiter-Stromschlag auftritt; beide elektronischen Schalter werden geschlossen, um einen Kurzschlussstrom zu erzeugen; der Leistungsschalter wird abgeschaltet, um die Personensicherheit zu schützen; und die Stromversorgung kann durch manuelles Schließen eines Schalters wiederhergestellt werden, nachdem durch Personal bestätigt wurde, dass niemand einen Stromschlag erlitten hat.

9. Verfahren zur Überwachung und zum Schutz vor Stromschlag für ein Niederspannungs-Endgerät, wobei das Verfahren auf der Vorrichtung zur Überwachung und zum Schutz vor Stromschlag für ein Niederspannungs-Endgerät nach Anspruch 7 basiert; wobei nur ein Stromsensor vorhanden ist und N = 1 ist, wird die Benutzerseitenleitung in zwei Abschnitte unterteilt; es wird festgelegt, dass ein vom ersten Spannungssensor (2) gemessener Wert V₁ ist, ein vom zweiten Spannungssensor (3) gemessener Wert V₂ ist und ein vom ersten Stromsensor (4) erfasster Strom I₁ ist; und wenn ein Stromschlag auftritt, werden die folgenden Maßnahmen ergriffen:
(1) wenn kein Stromschlag auftritt, beträgt eine Ausgangsspannung des Stromsensors 0, die zwei Versorgungsleitungen weisen gleiche Erdspannungen mit entgegengesetzter Polarität auf, und die zwei elektronischen Schalter führen keine Aktionen aus;
(2) wenn festgestellt wird, dass V₁ positiv und V₂ negativ ist, wenn I₁ = 0 ist und der Wert von V₁ abnimmt und der Wert von V₂ zunimmt, wird angezeigt, dass in dem ersten Abschnitt der Leitung ein Einleiter-Stromschlag an der Leitung A auftritt, der Mikroprozessor sendet eine Anweisung und der elektronische Schalter S₁ wird eingeschaltet; wenn festgestellt wird, dass V₁ positiv und V₂ negativ ist, wenn I₁ = 0 ist und der Wert von V₁ zunimmt und der Wert von V₂ abnimmt, wird angezeigt, dass in dem ersten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ positiv und V₂ negativ ist, wenn I₁ < 0 ist und der Wert von V₁ zunimmt und der Wert von V₂ abnimmt, wird angezeigt, dass in dem zweiten Abschnitt der Leitung ein Einleiter-Stromschlag an der Leitung B auftritt, der Mikroprozessor sendet eine Anweisung und der elektronische Schalter S₂ wird eingeschaltet; und wenn festgestellt wird, dass V₁ positiv und V₂ negativ ist, wenn I₁ > 0 ist und der Wert von V₁ abnimmt und der Wert von V₂ zunimmt, wird angezeigt, dass in dem zweiten Abschnitt der Leitung ein Einleiter-Stromschlag an der Leitung A auftritt, der Mikroprozessor sendet eine Anweisung und der elektronische Schalter S₁ wird eingeschaltet;
wenn festgestellt wird, dass V₁ negativ und V₂ positiv ist, wenn I₁ = 0 ist und der Wert von V₁ abnimmt und der Wert von V₂ zunimmt, wird angezeigt, dass in dem ersten Abschnitt der Leitung ein Einleiter-Stromschlag an der Leitung A auftritt, der Mikroprozessor sendet eine Anweisung und der elektronische Schalter S₁ wird eingeschaltet; wenn festgestellt wird, dass V₁ negativ und V₂ positiv ist, wenn I₁ = 0 ist und der Wert von V₁ zunimmt und der Wert von V₂ abnimmt, wird angezeigt, dass in dem ersten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ negativ und V₂ positiv ist, wenn I₁ < 0 ist und der Wert von V₂ zunimmt und der Wert von V₁ abnimmt, wird angezeigt, dass in dem zweiten Abschnitt der Leitung ein Einleiter-Stromschlag an der Leitung A auftritt, der Mikroprozessor sendet eine Anweisung und der elektronische Schalter S₁ wird eingeschaltet; und wenn festgestellt wird, dass V₁ negativ und V₂ positiv ist, wenn I₁ > 0 ist und der Wert von V₁ zunimmt und der Wert von V₂ abnimmt, wird angezeigt, dass in dem zweiten Abschnitt der Leitung ein Einleiter-Stromschlag an der Leitung B auftritt, der Mikroprozessor sendet eine Anweisung und der elektronische Schalter S₂ wird eingeschaltet; und
(3) wenn festgestellt wird, dass die Polarität von V₁ und V₂ derjenigen in der Ausführungsweise (2) entspricht, der Änderungsverlauf jedoch demjenigen in der Ausführungsweise (2) entgegengesetzt ist und der Änderungsverlauf von I₁ ebenfalls demjenigen in der Ausführungsweise (2) entgegengesetzt ist, wird angezeigt, dass sich der menschliche Körper vom Einleiter-Stromschlag löst, und folglich wird der entsprechende elektronische Schalter abgeschaltet; und
(4) wenn derselbe Stromsensor innerhalb einer kurzen Zeit von 0,05-1 Sekunde zwei Stromschlagimpulssignale erfasst und der Wert des zweiten Stroms deutlich größer ist als der des zuerst erfassten Stromschlagstroms, wird zu diesem Zeitpunkt festgestellt, dass ein Zweileiter-Stromschlag auftritt; beide elektronischen Schalter werden geschlossen, um einen Kurzschlussstrom zu erzeugen; der Leistungsschalter wird abgeschaltet, um die Personensicherheit zu schützen; und die Stromversorgung kann durch manuelles Schließen eines Schalters wiederhergestellt werden, nachdem durch Personal bestätigt wurde, dass niemand einen Stromschlag erlitten hat.

10. Ein Verfahren zur Überwachung und zum Schutz vor Stromschlag für ein Niederspannungs-Endgerät, wobei das Verfahren auf der Vorrichtung zur Überwachung und zum Schutz vor Stromschlag für ein Niederspannungs-Endgerät nach Anspruch 7 basiert; wobei nur ein Stromsensor vorhanden ist und N = 1 ist, ist der Stromsensor zwischen den Kondensatoren C₁ und C₂ und der Benutzerseitenleitung verbunden; es wird festgelegt, dass ein vom ersten Spannungssensor (2) gemessener Wert V₁ ist, ein vom zweiten Spannungssensor (3) gemessener Wert V₂ ist und ein vom ersten Stromsensor (4) erfasster Strom I₁ ist; eine Richtung, in der ein Strom von der Sekundärseite des Trenntransformators zur Benutzerseite fließt, wird als positive Richtung festgelegt, andernfalls ist die Stromrichtung negativ; und wenn ein Stromschlag auftritt, werden die folgenden Maßnahmen ergriffen:
(1) wenn kein Stromschlag auftritt, beträgt eine mittlere Ausgangsspannung der Stromsensoren 0, die zwei Versorgungsleitungen weisen gleiche Erdspannungen mit entgegengesetzter Polarität auf, und die zwei elektronischen Schalter führen keine Aktionen aus;
(2) wenn festgestellt wird, dass V₁ positiv und V₂ negativ ist, wenn I₁ = 0 ist und der Wert von V₁ abnimmt und der Wert von V₂ zunimmt, wird angezeigt, dass in dem ersten Abschnitt der Leitung ein Einleiter-Stromschlag an der Leitung A auftritt, der Mikroprozessor sendet eine Anweisung und der elektronische Schalter S₁ wird eingeschaltet; wenn festgestellt wird, dass V₁ positiv und V₂ negativ ist, wenn I₁ = 0 ist und der Wert von V₁ zunimmt und der Wert von V₂ abnimmt, wird angezeigt, dass in dem ersten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ positiv und V₂ negativ ist, wenn I₁ < 0 ist und der Wert von V₁ zunimmt und der Wert von V₂ abnimmt, wird angezeigt, dass in dem zweiten Abschnitt der Leitung ein Einleiter-Stromschlag an der Leitung B auftritt, der Mikroprozessor sendet eine Anweisung und der elektronische Schalter S₂ wird eingeschaltet; und wenn festgestellt wird, dass V₁ positiv und V₂ negativ ist, wenn I₁ > 0 ist und der Wert von V₁ abnimmt und der Wert von V₂ zunimmt, wird angezeigt, dass in dem zweiten Abschnitt der Leitung ein Einleiter-Stromschlag an der Leitung A auftritt, der Mikroprozessor sendet eine Anweisung und der elektronische Schalter S₁ wird eingeschaltet;
wenn festgestellt wird, dass V₁ negativ und V₂ positiv ist, wenn I₁ = 0 ist und der Wert von V₁ abnimmt und der Wert von V₂ zunimmt, wird angezeigt, dass in dem ersten Abschnitt der Leitung ein Einleiter-Stromschlag an der Leitung A auftritt, der Mikroprozessor sendet eine Anweisung und der elektronische Schalter S₁ wird eingeschaltet; wenn festgestellt wird, dass V₁ negativ und V₂ positiv ist, wenn I₁ positiv ist und der Wert von V₁ zunimmt und der Wert von V₂ abnimmt, wird angezeigt, dass in dem ersten Abschnitt der Leitung ein Einleiter-Stromschlag an der Leitung B auftritt, der Mikroprozessor sendet eine Anweisung und der elektronische Schalter S₂ wird eingeschaltet; wenn festgestellt wird, dass V₁ negativ und V₂ positiv ist, wenn I₁ < 0 ist und der Wert von V₂ zunimmt und der Wert von V₁ abnimmt, wird angezeigt, dass in dem zweiten Abschnitt der Leitung ein Einleiter-Stromschlag an der Leitung A auftritt, der Mikroprozessor sendet eine Anweisung und der elektronische Schalter S₁ wird eingeschaltet; und wenn festgestellt wird, dass V₁ negativ und V₂ positiv ist, wenn I₁ > 0 ist und der Wert von V₁ zunimmt und der Wert von V₂ abnimmt, wird angezeigt, dass in dem zweiten Abschnitt der Leitung ein Einleiter-Stromschlag an der Leitung B auftritt, der Mikroprozessor sendet eine Anweisung und der elektronische Schalter S₂ wird eingeschaltet;
(3) wenn festgestellt wird, dass die Polarität von V₁ und V₂ derjenigen in der Ausführungsweise (2) entspricht, der Änderungsverlauf jedoch demjenigen in der Ausführungsweise (2) entgegengesetzt ist und der Änderungsverlauf von I₁ ebenfalls demjenigen in der Ausführungsweise (2) entgegengesetzt ist, wird angezeigt, dass sich der menschliche Körper vom Einleiter-Stromschlag löst, und folglich wird der entsprechende elektronische Schalter abgeschaltet; und
(4) wenn derselbe Stromsensor innerhalb einer kurzen Zeit von 0,05-1 Sekunde zwei Stromschlagimpulssignale erfasst und der Wert des zweiten Stroms deutlich größer ist als der des zuerst erfassten Stromschlagstroms, wird zu diesem Zeitpunkt festgestellt, dass ein Zweileiter-Stromschlag auftritt; beide elektronischen Schalter werden geschlossen, um einen Kurzschlussstrom zu erzeugen; der Leistungsschalter wird abgeschaltet, um die Personensicherheit zu schützen; und die Stromversorgung kann durch manuelles Schließen eines Schalters wiederhergestellt werden, nachdem durch Personal bestätigt wurde, dass niemand einen Stromschlag erlitten hat.

## Revendications

1. Dispositif de surveillance et de protection anti-chocs électriques pour un terminal utilisateur à basse tension, **caractérisé en ce qu'**il comprend un transformateur d'isolement (1), deux capteurs de tension, un ou plusieurs capteurs de courant, un circuit de conditionnement, un microprocesseur (6), deux commutateurs électroniques et un disjoncteur (7); dans lequel,
les deux capteurs de tension sont respectivement un premier capteur de tension (2) et un deuxième capteur de tension (3), et les deux commutateurs électroniques sont respectivement un commutateur électronique S₁ et un commutateur électronique S₂;
le transformateur d'isolement (1) et le disjoncteur (7) sont successivement disposés entre l'électricité secteur et un côté utilisateur, une extrémité du premier capteur de tension (2) est connectée à un fil A, une extrémité du deuxième capteur de tension (3) est connectée à un fil B, et les autres extrémités des deux capteurs de tension sont toutes deux mises à la terre ; une extrémité du commutateur électronique S₁ est connectée au fil A, l'autre extrémité est connectée en série à une résistance R₁ et est mise à la terre, et deux extrémités du commutateur électronique S₁ et de la résistance R₁ sont connectées en parallèle à un condensateur C₁, une extrémité du commutateur électronique S₂ est connectée au fil B, et l'autre extrémité est connectée en série à une résistance R₂ et mise à la terre, et deux extrémités du commutateur électronique S₂ et de la résistance R₂ sont connectées en parallèle à un condensateur C₂ ; des valeurs de capacité satisfont à C₁≈ C₂, et sont inférieures à une capacité de mise à la terre C₀ du fil A ou du fil B;
le capteur de courant comprend une bobine à anneau magnétique et une résistance de limitation de courant, et est destiné à mesurer une valeur et une direction d'un courant de choc électrique, un anneau magnétique est manchonné à un côté extérieur des deux fils, une bobine est enroulée sur l'anneau magnétique, et la résistance de limitation de courant est connectée à une extrémité de sortie de la bobine pour fournir une tension de sortie mesurable;
des extrémités de sortie des deux capteurs de tension, des deux commutateurs électroniques et des capteurs de courant sont toutes connectées à une extrémité d'entrée du circuit de conditionnement, l'extrémité d'entrée du circuit de conditionnement est connectée à une extrémité d'entrée du microprocesseur (6), et une extrémité de sortie du microprocesseur (6) est connectée à des extrémités de commande des deux commutateurs électroniques respectivement;
le dispositif est adapté pour exécuter les fonctions suivantes pendant le fonctionnement, le transformateur d'isolement (1) est configuré pour isoler l'électricité secteur du côté utilisateur; lorsqu'un choc électrique monophasé se produit sur le corps humain du côté utilisateur, le circuit de conditionnement est configuré pour effectuer un conditionnement de signaux provenant respectivement des capteurs de tension et des capteurs de courant et pour distinguer un fil au choc électrique en détectant des tensions par rapport à la terre et des courants de choc électrique de deux fils d'alimentation; le microprocesseur (6) émet des signaux de commande pour commander les commutateurs électroniques connecté en parallèle à deux extrémités d'un condensateur de mise à la terre d'une ligne correspondante à se fermer; lorsqu'un choc électrique se produit sur le corps humain mais qu'aucune blessure personnelle n'est causée, le commutateur électronique entre le fil au choc électronique et la terre est fermé, de sorte que sa tension par rapport à la terre diminue rapidement à près de 0, protégeant ainsi la sécurité personnelle; et lorsqu'un choc électrique biphasé se produit sur le corps humain, les deux commutateurs électroniques sont fermés, ce qui provoque un court-circuit entre les fils et amène le disjoncteur (7) à se déclencher automatiquement pour protéger la sécurité personnelle.

2. Dispositif de surveillance et de protection anti-chocs électriques pour un terminal utilisateur à basse tension selon la revendication 1, **caractérisé en ce que**, le transformateur d'isolement (1) est configuré pour réaliser un isolement électrique, dont une extrémité d'entrée est alimentée par le réseau électrique de 220V, et une sortie secondaire est une tension isolée de 220V, servant à alimenter le côté utilisateur.

3. Dispositif de surveillance et de protection anti-chocs électriques pour un terminal utilisateur à basse tension selon la revendication 1, **caractérisé en ce que**, les deux capteurs de tension présentent des structures identiques et sont configurés pour mesurer une polarité et une valeur des tension des deux fils par rapport à la terre; une résistance des capteurs n'est pas inférieure à 220 kiloohms; et un décalage de phase à une fréquence de puissance de 50 Hz est inférieur à 10°.

4. Dispositif de surveillance et de protection anti-chocs électriques pour un terminal utilisateur à basse tension selon la revendication 1, **caractérisé en ce que**, le microprocesseur (6) est configuré pour recevoir des signaux de détection des capteurs de courant et des capteurs de tension, pour juger le fil au choc électrique, intégrer la tension de sortie des capteurs de courant, et commander le commutateur électronique à s'ouvrir ou à se fermer ; et pour s'assurer que, lorsqu'un choc électrique se produit sur le corps humain, le microprocesseur (6) puisse émettre à temps des instructions pour commander une action du commutateur électronique, un cycle d'exécution de programme du microprocesseur (6) est inférieur à 1 ms, satisfaisant ainsi aux exigences de temps de réponse d'un dispositif de détection et correspondant à une vitesse d'un élément d'acquisition de signaux.

5. Dispositif de surveillance et de protection anti-chocs électriques pour un terminal utilisateur à basse tension selon la revendication 1, **caractérisé en ce que**, lorsque le microprocesseur (6) émet un signal de commande correspondant, le commutateur électronique correspondant se ferme, et le commutateur électronique satisfait à une exigence qu'un courant de fuite est inférieur à 1 µA et un temps de réponse est inférieur à 0,1 ms, dans laquelle une tension de tenue du commutateur électronique est supérieure à 220 V ; un relais à état solide ou un transistor à effet de champ est utilisé; une valeur de résistance R de la résistance connectée en série au commutateur électronique est comprise entre 250 ohms et 20 kilo-ohms, une puissance de tenue pendant 1 seconde est supérieure à 220 V²/R, la précision est déterminée en fonction d'un niveau d'exactitude de mesure et n'est pas inférieure à 0,01 %, toutes les résistances sont des résistances à faible déviation thermique, et la déviation de température est inférieure à 1 ppm/°C.

6. Dispositif de surveillance et de protection anti-chocs électriques pour un terminal utilisateur à basse tension selon la revendication 1, **caractérisé en ce qu'**une valeur de consigne de courant de choc électronique du commutateur électronique du dispositif est inférieure à 5 mA pour prendre une action de protection, ou est définie par un utilisateur, et le temps d'action est inférieur à 10 ms.

7. Dispositif de surveillance et de protection anti-chocs électriques pour un terminal utilisateur à basse tension selon la revendication 1, **caractérisé en ce qu'**un ou plusieurs capteurs de courant sont montés selon des situations réelles et une limite de détection du capteur de courant est inférieur à 1 mA; si N capteurs de courant sont montés, et N>=2, une ligne à partir du côté utilisateur du transformateur d'isolement (1) jusqu'à une extrémité la plus éloignée du côté utilisateur est divisée successivement en N+1 sections identiques au total, c'est-à-dire la première, la deuxième, ..., et (N+1)-ème sections, un capteur de courant est monté à chaque point de démarcation de la ligne, dans lequel un capteur de courant monté entre la première section et la deuxième section est un premier capteur de courant (4), un capteur de courant monté entre la deuxième section et la troisième section est un deuxième capteur de courant (5), ..., et un capteur de courant monté entre la N-ème section et la (N+1)-ème section est un N-ème capteur de courant; si un seul capteur de courant est monté, il est monté à un point intermédiaire, et la ligne à partir du côté utilisateur du transformateur d'isolement (1) jusqu'à l'extrémité la plus éloignée du côté utilisateur est divisée successivement en deux sections identiques au total, c'est-à-dire la première section et la deuxième section; et si toute la ligne du côté utilisateur ne peut être changée sauf l'extrémité d'entrée utilisateur, le capteur de courant est monté entre les condensateurs C₁ et C₂ connectés en parallèle et la ligne du côté utilisateur, et les valeurs de capacité des condensateurs connectés satisfont à C₁≈ C₂≈ C₀.

8. Procédé de surveillance et de protection anti-chocs électriques pour un terminal utilisateur à basse tension, **caractérisé en ce qu'**il est basé sur le dispositif de surveillance et de protection anti-chocs électriques pour un terminal utilisateur à basse tension selon la revendication 7, si N capteurs de courant sont prévus, la ligne du côté utilisateur est divisée en N+1 sections ; un résultat mesuré par le premier capteur de tension (2) est défini comme V₁, un résultat mesuré par le deuxième capteur de tension (3) est défini comme V₂, un courant détecté par le premier capteur de courant (4) est défini comme I₁, un courant détecté par le deuxième capteur de courant (5) est défini comme I₂, ..., et un courant détecté par le N-ème capteur de courant est défini comme I_{N}; une direction d'un courant à partir d'un côté secondaire du transformateur d'isolement vers un terminal utilisateur est définie comme direction positive; au contraire, la direction du courant est négative; et lorsqu'un choc électrique se produit, les actions sont prises de manières suivantes:
(1) lorsqu'aucun choc électrique ne se produit, une tension de sortie de chaque capteur de courant est de 0, et deux fils d'alimentation ont des tensions égales par rapport à la masse et ont des polarités opposées, et aucune action ne prise par les deux commutateurs électroniques;
(2) lorsqu'il est détecté que V₁ est positive et V₂ est négative, si I₁=I₂=0, et qu'une valeur de V₁ diminue tandis qu'une valeur de V₂ augmente, cela indique qu'un choc électrique monophasé se produit sur le fil A dans la première section de la ligne, le microprocesseur émet une instruction et le commutateur électronique S₁ est branché; lorsqu'il est détecté que V₁ est positive et V₂ est négative, si Iₕ₋₁ est positif et Iₕ = 0, et qu'une valeur de V₁ diminue tandis qu'une valeur de V₂ augmente, cela indique qu'un choc électrique monophasé se produit sur le fil A dans la h-ème section de la ligne, le microprocesseur émet une instruction et le commutateur électronique S₁ est branché, où 2<=h<=N; lorsqu'il est détecté que V₁ est positive et V₂ est négative, si I_{N-1}>0 et I_{N}=0, et qu'une valeur de V₁ diminue tandis qu'une valeur de V₂ augmente, cela indique qu'un choc électrique monophasé se produit sur le fil A dans la (N+1)-ème section de la ligne, le microprocesseur émet une instruction et le commutateur électronique S₁ est branché; lorsqu'il est détecté que V₁ est positive et V₂ est négative, si I₁=I₂=0, et qu'une valeur de V₁ augmente tandis qu'une valeur de V₂ diminue, cela indique qu'un choc électrique monophasé se produit sur le fil B dans la première section de la ligne, le microprocesseur émet une instruction et le commutateur électronique S₂ est branché; lorsqu'il est détecté que V₁ est positive et V₂ est négative, si Iₕ₋₁<0 et Iₕ=0, et qu'une valeur de V₁ augmente tandis qu'une valeur de V₂ diminue, cela indique qu'un choc électrique monophasé se produit sur le fil B dans la h-ème section de la ligne, le microprocesseur émet une instruction et le commutateur électronique S₂ est branché; lorsqu'il est détecté que V₁ est positive et V₂ est négative, si I_{N-1}<0 et I_{N}<0, et qu'une valeur de V₁ augmente tandis qu'une valeur de V₂ diminue, cela indique qu'un choc électrique monophasé se produit sur le fil B dans la (N+1)-ème section de la ligne, le microprocesseur émet une instruction, et le commutateur électronique S₂ est branché ; lorsqu'il est détecté que V₁ est négative et V₂ est positive, si I₁=I₂=0, et qu'une valeur de V₁ diminue tandis qu'une valeur de V₂ augmente, cela indique qu'un choc électrique monophasé se produit sur le fil A dans la première section de la ligne, le microprocesseur émet une instruction, et le commutateur électronique S₁ est branché; lorsqu'il est détecté que V₁ est négative et V₂ est positive, si Iₕ₋₁<0 et Iₕ=0, et qu'une valeur de V₁ diminue tandis qu'une valeur de V₂ augmente, cela indique qu'un choc électrique monophasé se produit sur le fil A dans la h-ème section de la ligne, le microprocesseur émet une instruction, et le commutateur électronique S₁ est branché; lorsqu'il est détecté que V₁ est négative et V₂ est positive, si I_{N-1}<0 et I_{N}<0, et qu'une valeur de V₁ diminue tandis qu'une valeur de V₂ augmente, cela indique qu'un choc électrique monophasé se produit sur le fil A dans la (N+1)-ème section de la ligne, le microprocesseur émet une instruction, et le commutateur électronique S₁ est branché;
lorsqu'il est détecté que V₁ est négative et V₂ est positive, si I₁=I₂=0, et qu'une valeur de V₁ augmente tandis qu'une valeur de V₂ diminue, cela indique qu'un choc électrique monophasé se produit sur le fil B dans la première section de la ligne, le microprocesseur émet une instruction et le commutateur électronique S₂ est branché; lorsqu'il est détecté que V₁ est négative et V₂ est positive, si Iₕ₋₁<0 et Iₕ=0, et qu'une valeur de V₁ diminue tandis qu'une valeur de V₂ augmente, cela indique qu'un choc électrique monophasé se produit sur le fil B dans la h-ème section de la ligne, le microprocesseur émet une instruction et le commutateur électronique S₂ est branché; lorsqu'il est détecté que V₁ est négative et V₂ est positive, si I_{N-1}<0 et I_{N}<0, et qu'une valeur de V₁ diminue tandis qu'une valeur de V₂ augmente, cela indique qu'un choc électrique monophasé se produit sur le fil B dans la (N+1)-ème section de la ligne, le microprocesseur émet une instruction et le commutateur électronique S₂ est branché;
(3) lorsqu'il est détecté que la polarité de V₁ et de V₂ est la même que celle de la manière (2) mais qu'une tendance de changement est opposée à celle de la manière (2), et qu'une tendance du changement de courant est également opposée à celle de la manière (2), cela indique que le corps humain se libère du choc électrique monophasé, et par conséquent, le commutateur électronique correspondant est débranché; et
(4) lorsqu'un même capteur de courant détecte deux signaux d'impulsions de courant de choc électronique dans un court intervalle de 0,05 à 1 seconde, et qu'une valeur du deuxième courant est nettement supérieure à celle du premier courant de choc électronique détecté, il est déterminé qu'un choc électrique biphasé se produit à ce moment, les deux commutateurs électroniques se ferment pour générer un courant de court-circuit, et le disjoncteur est débranché pour protéger la sécurité personnelle, et l'alimentation ne peut être rétablie qu'en fermant manuellement un commutateur après avoir confirmé par le personnel qu'aucune personne n'est soumis à un choc électrique.

9. Procédé de surveillance et de protection anti-chocs électriques pour un terminal utilisateur à basse tension, **caractérisé en ce qu'**il est basé sur le dispositif de surveillance et de protection anti-chocs électriques pour un terminal utilisateur à basse tension selon la revendication 7, dans lequel un seul capteur de courant est prévu et N=1, la ligne du côté utilisateur est divisée en deux sections, un résultat mesuré par le premier capteur de tension (2) est défini comme V₁, un résultat mesuré par le deuxième capteur de tension (3) est défini comme V₂, un courant détecté par le premier capteur de courant (4) est défini comme I₁, et lorsqu'un choc électrique se produit, les actions sont prises de manières suivantes:
(1) lorsqu'aucun choc électrique ne se produit, une tension de sortie de chaque capteur de courant est de 0, et deux fils d'alimentation ont des tensions égales par rapport à la masse et ont des polarités opposées, et aucune action ne prise par les deux commutateurs électroniques;
(2) lorsqu'il est détecté que V₁ est positive et V₂ est négative, si I₁=0, et qu'une valeur de V₁ diminue tandis qu'une valeur de V₂ augmente, cela indique qu'un choc électrique monophasé se produit sur le fil A dans la première section de la ligne, le microprocesseur émet une instruction et le commutateur électronique S₁ est branché; lorsqu'il est détecté que V₁ est positive et V₂ est négative, si I₁=0, et qu'une valeur de V₁ augmente tandis qu'une valeur de V₂ diminue, cela indique qu'un choc électrique monophasé se produit sur le fil B dans la première section de la ligne, le microprocesseur émet une instruction et le commutateur électronique S₂ est branché; lorsqu'il est détecté que V₁ est positive et V₂ est négative, si I₁<0, et qu'une valeur de V₁ augmente tandis qu'une valeur de V₂ diminue, cela indique qu'un choc électrique monophasé se produit sur le fil B dans la deuxième section de la ligne, le microprocesseur émet une instruction et le commutateur électronique S₂ est branché; lorsqu'il est détecté que V₁ est positive et V₂ est négative, si I₁>0, et qu'une valeur de V₁ diminue tandis qu'une valeur de V₂ augmente, cela indique qu'un choc électrique monophasé se produit sur le fil A dans la deuxième section de la ligne, le microprocesseur émet une instruction et le commutateur électronique S₁ est branché;
lorsqu'il est détecté que V₁ est négative et V₂ est positive, si I₁=0, et qu'une valeur de V₁ diminue tandis qu'une valeur de V₂ augmente, cela indique qu'un choc électrique monophasé se produit sur le fil A dans la première section de la ligne, le microprocesseur émet une instruction et le commutateur électronique S₁ est branché; lorsqu'il est détecté que V₁ est négative et V₂ est positive, si I₁=0, et qu'une valeur de V₁ augmente tandis qu'une valeur de V₂ diminue, cela indique qu'un choc électrique monophasé se produit sur le fil B dans la première section de la ligne, le microprocesseur émet une instruction et le commutateur électronique S₂ est branché; lorsqu'il est détecté que V₁ est négative et V₂ est positive, si I₁<0, et qu'une valeur de V₂ augmente tandis qu'une valeur de V₁ diminue, cela indique qu'un choc électrique monophasé se produit sur le fil A dans la deuxième section de la ligne, le microprocesseur émet une instruction et le commutateur électronique S₁ est branché; lorsqu'il est détecté que V₁ est négative et V₂ est positive, si I₁>0, et qu'une valeur de V₁ augmente tandis qu'une valeur de V₂ diminue, cela indique qu'un choc électrique monophasé se produit sur le fil B dans la deuxième section de la ligne, le microprocesseur émet une instruction et le commutateur électronique S₂ est branché;
(3) lorsqu'il est détecté que la polarité de V₁ et de V₂ est la même que celle de la manière (2) mais qu'une tendance de changement est opposée à celle de la manière (2), et qu'une tendance du changement de I₁ est également opposée à celle de la manière (2), cela indique que le corps humain se libère du choc électrique monophasé, et par conséquent, le commutateur électronique correspondant est débranché; et
(4) lorsqu'un même capteur de courant détecte deux signaux d'impulsions de courant de choc électronique dans un court intervalle de 0,05 à 1 seconde, et qu'une valeur du deuxième courant est nettement supérieure à celle du premier courant de choc électronique détecté, il est déterminé qu'un choc électrique biphasé se produit à ce moment, les deux commutateurs électroniques se ferment pour générer un courant de court-circuit, et le disjoncteur est débranché pour protéger la sécurité personnelle, et l'alimentation ne peut être rétablie qu'en fermant manuellement un commutateur après avoir confirmé par le personnel qu'aucune personne n'est soumis à un choc électrique.

10. Procédé de surveillance et de protection anti-chocs électriques pour un terminal utilisateur à basse tension, **caractérisé en ce qu'**il est basé sur le dispositif de surveillance et de protection anti-chocs électriques pour un terminal utilisateur à basse tension selon la revendication 7, dans lequel un seul capteur de courant est prévu et N=1, le capteur de courant est connecté entre les condensateurs C₁ et C₂ et la ligne du côté utilisateur, un résultat mesuré par le premier capteur de tension (2) est défini comme V₁, un résultat mesuré par le deuxième capteur de tension (3) est défini comme V₂, et un courant détecté par le premier capteur de courant (4) est défini comme I₁; une direction d'un courant à partir d'un côté secondaire du transformateur d'isolement vers un terminal utilisateur est définie comme direction positive; au contraire, la direction du courant est négative; et lorsqu'un choc électrique se produit, les actions sont prises de manières suivantes:
(1) lorsqu'aucun choc électrique ne se produit, une tension de sortie moyenne de chaque capteur de courant est de 0, et deux fils d'alimentation ont des tensions égales par rapport à la masse et ont des polarités opposées, et aucune action ne prise par les deux commutateurs électroniques;
(2) lorsqu'il est détecté que V₁ est positive et V₂ est négative, si I₁=0, et qu'une valeur de V₁ diminue tandis qu'une valeur de V₂ augmente, cela indique qu'un choc électrique monophasé se produit sur le fil A dans la première section de la ligne, le microprocesseur émet une instruction et le commutateur électronique S₁ est branché; lorsqu'il est détecté que V₁ est positive et V₂ est négative, si I₁=0, et qu'une valeur de V₁ augmente tandis qu'une valeur de V₂ diminue, cela indique qu'un choc électrique monophasé se produit sur le fil B dans la première section de la ligne, le microprocesseur émet une instruction et le commutateur électronique S₂ est branché; lorsqu'il est détecté que V₁ est positive et V₂ est négative, si I₁<0, et qu'une valeur de V₁ augmente tandis qu'une valeur de V₂ diminue, cela indique qu'un choc électrique monophasé se produit sur le fil B dans la deuxième section de la ligne, le microprocesseur émet une instruction et le commutateur électronique S₂ est branché; lorsqu'il est détecté que V₁ est positive et V₂ est négative, si I₁>0, et qu'une valeur de V₁ diminue tandis qu'une valeur de V₂ augmente, cela indique qu'un choc électrique monophasé se produit sur le fil A dans la deuxième section de la ligne, le microprocesseur émet une instruction et le commutateur électronique S₁ est branché;
lorsqu'il est détecté que V₁ est négative et V₂ est positive, si I₁=0, et qu'une valeur de V₁ diminue tandis qu'une valeur de V₂ augmente, cela indique qu'un choc électrique monophasé se produit sur le fil A dans la première section de la ligne, le microprocesseur émet une instruction et le commutateur électronique S₁ est branché; lorsqu'il est détecté que V₁ est négative et V₂ est positive, si I₁ est positif, et qu'une valeur de V₁ augmente tandis qu'une valeur de V₂ diminue, cela indique qu'un choc électrique monophasé se produit sur le fil B dans la première section de la ligne, le microprocesseur émet une instruction et le commutateur électronique S₂ est branché; lorsqu'il est détecté que V₁ est négative et V₂ est positive, si I₁<0, et qu'une valeur de V₂ augmente tandis qu'une valeur de V₁ diminue, cela indique qu'un choc électrique monophasé se produit sur le fil A dans la deuxième section de la ligne, le microprocesseur émet une instruction et le commutateur électronique S₁ est branché; lorsqu'il est détecté que V₁ est négative et V₂ est positive, si I₁>0, et qu'une valeur de V₁ augmente tandis qu'une valeur de V₂ diminue, cela indique qu'un choc électrique monophasé se produit sur le fil B dans la deuxième section de la ligne, le microprocesseur émet une instruction et le commutateur électronique S₂ est branché;
(3) lorsqu'il est détecté que la polarité de V₁ et de V₂ est la même que celle de la manière (2) mais qu'une tendance de changement est opposée à celle de la manière (2), et qu'une tendance du changement de I₁ est également opposée à celle de la manière (2), cela indique que le corps humain se libère du choc électrique monophasé, et par conséquent, le commutateur électronique correspondant est débranché; et
(4) lorsqu'un même capteur de courant détecte deux signaux d'impulsions de courant de choc électronique dans un court intervalle de 0,05 à 1 seconde, et qu'une valeur du deuxième courant est nettement supérieure à celle du premier courant de choc électronique détecté, il est déterminé qu'un choc électrique biphasé se produit à ce moment, les deux commutateurs électroniques se ferment pour générer un courant de court-circuit, et le disjoncteur est débranché pour protéger la sécurité personnelle, et l'alimentation ne peut être rétablie qu'en fermant manuellement un commutateur après avoir confirmé par le personnel qu'aucune personne n'est soumis à un choc électrique.
